# EUROPEAN PATENT SPECIFICATION

(11) **EP 2 674 896 B1**
(45) Date of publication and mention of the grant of the patent: **18.11.2015**
(21) Application number: 12786171.4
(22) Date of filing: 15.05.2012
(51) Int. Cl.: G06K 9/68, B09B 3/00, B09B 5/00, G06K 9/72

(54) **CHARACTER STRING EXTRACTION METHOD AND CHARACTER STRING EXTRACTION DEVICE**
ZEICHENKETTENEXTRAKTIONSVERFAHREN UND ZEICHENKETTENEXTRAKTIONSVORRICHTUNG
PROCÉDÉ ET DISPOSITIF D'EXTRACTION DE CHAÎNE DE CARACTÈRES

(30) Priority: 17.05.2011 JP 2011109997; 13.09.2011 JP 2011199292; 13.09.2011 JP 2011199293
(43) Date of publication of application: 18.12.2013
(73) Proprietor: Panasonic Intellectual Property Management Co., Ltd., Osaka 540-6207 (JP)
(72) Inventor: SETOYAMA, Masahiro, Osaka 540-6207 (JP); HIROTOMI, Haruo, Osaka 540-6207 (JP); OBATA, Kazuhiko, Osaka 540-6207 (JP); FUJIWARA, Masanori, Osaka 540-6207 (JP); MORI, Akimichi, Osaka 540-6207 (JP); HATADA, Naoki, Osaka 540-6207 (JP)
(74) Representative: Vigand, Philippe
(86) International application number: PCT/JP2012/003151
(87) International publication number: WO 2012/157252

(56) References cited:
- GB-A- 2 392 290
- JP-A- 5 189 485
- JP-A- 2001 312 693
- JP-A- 2003 308 363
- JP-A- 2004 213 091
- JP-A- 2010 237 909
- JP-A- 2011 065 597
- SINHU R M K ET AL: "VISUAL TEXT RECOGNITION THROUGH CONTEXTUAL PROCESSING", PATTERN RECOGNITION, ELSEVIER, GB, vol. 21, no. 5, 1 January 1988 (1988-01-01), pages 463-479, XP001111479, ISSN: 0031-3203, DOI: 10.1016/0031-3203(88)90006-4
- SINHA R M K ET AL: "Hybrid contextural text recognition with string matching", PATTERN ANALYSIS AND MACHINE INTELLIGENCE, IEEE TRANSACTIONS ON, IEEE SERVICE CENTER, LOS ALAMITOS, CA, US, vol. 15, no. 9, 1 September 1993 (1993-09-01), pages 915-925, XP000394358, ISSN: 0162-8828, DOI: 10.1109/34.232077
- White A.: "JavaScript - Programmer's Reference", 2009, Wiley Publishing, Inc., Indianapolis, IN, XP002720138, ISBN: 978-0-470-34472-9 pages 189-190, * page 189, section "Fuzzy String Comparison" * * page 190, section "Stripping Non-Alphanumeric Characters" *
- Anonymous: "php - Reg exp wanted for replacing all non-alphanumeric chars with underscores - Stack Overflow", , 12 November 2009 (2009-11-12), XP055101518, Retrieved from the Internet: URL:http://stackoverflow.com/questions/172 5104/reg-exp-wanted-for-replacing-all-non- alphanumeric-chars-with-underscores [retrieved on 2014-02-11]
- Anonymous: "Strip All Non-Alphanumeric Characters from String PHP Server Side Scripting forum at WebmasterWorld", , 23 October 2002 (2002-10-23), XP055101525, Retrieved from the Internet: URL:http://www.webmasterworld.com/forum88/ 1096.htm [retrieved on 2014-02-11]

## Description

### TECHNICAL FIELD

The present invention relates to a character string extraction method and a character string extraction device that read pieces of individual information displayed on electric appliances such as household electrical appliances, in-vehicle products for automobiles, and business equipment. The individual information mainly includes a product number, a model number, or the like of a product.

### BACKGROUND ART

In recent years, various regulations against global warming are gradually established. As a result of technical innovations made to cope with the regulations, there are household electrical appliances, especially, refrigerators, using a variety of materials for the same parts in society as a whole.

More specifically, as refrigerant of a refrigerator, chlorofluorocarbon and a combustible refrigerant are employed. As chlorofluorocarbons, R12, R22, R134a, and R502 are used. As a combustible refrigerant, isobutane is used. As foaming gases for a thermal insulating material of a refrigerator, chlorofluorocarbon (R11 and R141b) and cyclopentane are used. Alternatively, as another thermal insulating material of a refrigerator, a vacuum thermal insulating material is used. As the vacuum thermal insulating material, urethane foam and glass fiber are used. The vacuum thermal insulating material is formed by vacuum-packing these materials. Some vacuum thermal insulating material is attached with a getter material to maintain the insulation efficiency.

Various agreements are made to disassemble and process refrigerators using a multiple of materials. More specifically, in terms of prevention against global warming, chlorofluorocarbons are required to be collected in units of types. In terms of the securing of safety in a dismantling operation, after the dismantling operation is performed while diluting isobutane and cyclopentane, resultant gases are released to the atmosphere.

In order to satisfy the various demands, at a site where refrigerators are disassembled, refrigerators to be discarded are grouped by the types of chlorofluorocarbons and the types of thermal insulating materials used therein. A predetermined number of grouped refrigerators are accumulated and then subjected to a dismantling operation.

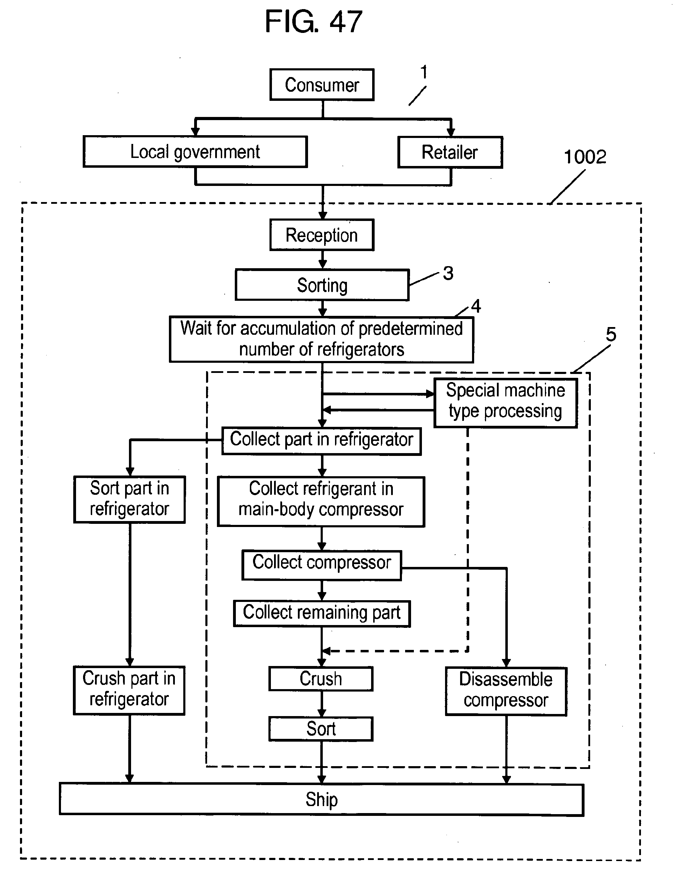

An outline of the dismantling operation will be described with reference to FIG. 47.

Discarded refrigerators in market 1 are collected into recycle factory 1002. The collected refrigerators are sorted by the types of chlorofluorocarbons, thermal insulating materials, and the like used therein (3). Until the number of refrigerators using members of the same type reaches a predetermined number, the sorted refrigerators are stored (predetermined number accumulation waiting 4).

When a predetermined number of refrigerators using members of the same type are accumulated, the refrigerators are moved to a dismantling line for refrigerator. The refrigerators moved to the dismantling line are dismantled by a processing method adapted to the members. The method for dismantling as described above is called lot process 5.

For example, Patent Literature 1 describes one example of a lot process focusing attention on a thermal insulating material.

GB 2 392 290 A describes a method of correcting errors in a text based electronic document.

The article "Visual text recognition through contextual processing" by Sinha et al. (1988) presents a two pass contextual processing algorithm limited to the word level using a partial dictionary with an augmented dictionary approach.

The article "Hybrid contextual text recognition with string matching" by Sinha et al. (1993) presents a hybrid contextual algorithm designed to read real-life documents printed in varying fonts of any size, wherein text is recognized progressively in three passes.

JP 2011-65597 describes a data search device, data search method and program designed to perform data retrieval from character-recognized text.

In a conventional method for dismantling refrigerators, a dismantling operation for refrigerators is not performed until a predetermined number of refrigerators are accumulated for each lot. Refrigerators waiting for an operation are stored as stocks. Each lot means a group of refrigerators using the same specific material. In a refrigerator, the material mainly intends to a combination of a refrigerant and a thermal insulating material. Another conditions may be added.

In recent years, large-size refrigerators tend to be preferred. Refrigerators waiting for an operation are stored by using a vast space.

In particular, as the result of summative development of each element technology centered on a refrigerant, rates of accumulation in the lots are different from each other. More specifically, refrigerators using materials that are mainly collected from the market or refrigerators employing newly applied materials are slowly accumulated. The refrigerators that are slowly accumulated are considerably deteriorated in processing freshness of a dismantling operation. The processing freshness of dismantling operation means a period from a time when a refrigerator is collected in a recycle factory to a time when a dismantling operation for the refrigerator is started. More specifically, the refrigerators that are slowly accumulated are collected in the recycle factory consequently wait for a long period until the dismantling operation is started.

### Citation List

### Patent Literature

PLT 1: Unexamined Japanese Patent Publication No. 2004-66628

### SUMMARY OF THE INVENTION

The present invention solves the above problems by using devices and methods described in embodiments (which will be described later).

A refrigerator dismantling device according to the present invention includes a storage unit, an individual information reading unit, a processing information fetching unit, a processing information display unit, a first determination unit, a first control unit, a second determination unit, a second control unit, a third determination unit, and a third control unit.

In the storage unit, processing information to dismantle a refrigerator is stored in advance. The individual information reading unit reads individual information from the refrigerator. The individual information mainly means a product number, a model number, or the like (to be referred to as a "product number" hereinafter) of a product. The processing information fetching unit fetches processing information from the read individual information. The processing information display unit displays the fetched processing information on the refrigerator.

The first determination unit, based on the displayed processing information, determines whether the refrigerator is shifted to a preliminary processing step or a refrigerant collecting step. The first control unit, based on the determination result obtained by the first determination unit, operates such that the first control unit directly shifts the refrigerator to a refrigerant collecting step or shifts the refrigerator to a preliminary processing step to perform preliminary processing based on the processing information to the refrigerator and then shifts the refrigerator to the refrigerant collecting step.

The second determination unit, in the refrigerant collecting step, determines a refrigerant to be collected from the refrigerator based on the processing information. The second control unit operates according to the determination result of the second determination unit to shift the refrigerator to a step of collecting a refrigerant from a refrigerator.

The third determination unit, after the refrigerant is collected from the refrigerator, determines whether the refrigerator is shifted to a crushing step or a standby step based on the processing information. The third control unit, based on the determination result obtained by the third determination result, operates such that the third control unit directly shifts the refrigerator to the crushing step to crush the refrigerator or shifts the refrigerator to the standby step and, after the number of refrigerators being standby in the standby step reaches a predetermined number, shifts the refrigerator to the crushing step to crush the refrigerator.

The processing information is information that expresses at least the type of a thermal insulating material and the type of a refrigerant used in a refrigerator. The processing information display unit operates to display, as the processing information, the types of refrigerant in different colors. The processing information display unit operates to display, as the processing information, the types of refrigerant in different symbols or graphics.

The preliminary processing step is a processing step of forming a hole in a housing configuring a refrigerator.

In the refrigerant collecting step, a jig for collecting a refrigerant and the type of the refrigerant are indicated in the same color.

In the dismantling device described above, without performing a lot process that requires line switching and a storage area, discarded refrigerators are dismantled in incoming order.

A method for dismantling refrigerators according to the present invention is performed along the operations of the dismantling device.

Furthermore, a character string extraction device used in the refrigerator dismantling device or the method for dismantling refrigerators according to the present invention extracts a pre-registered candidate character string from image information from which individual information is read.

The character string extraction device according to the present invention includes a replacement information registering unit, a candidate character data registering unit, an image information converting unit, a character information replacing unit, a search character generating unit, a first comparing unit, and a candidate character string output unit.

In the replacement information registering unit, replacement information to replace a specific character with a designated character with respect to character information to be expected to be erroneously recognized is registered in advance. In the candidate character data registering unit, candidate character data supposed when the designated character is used is registered in advance with respect to a candidate character string. The image information converting unit converts read image information into character information.

When the character information includes a specific character, the character information replacing unit replaces the specific character with a designated character. When the character information does not include the specific character, the character information replacing unit generates read character data by using the converted character information.

The search character generating unit replaces a predetermined character of the read character data with a special character. When special characters are continued, the search character generating unit further replaces a continued special character group with a special character. Search character data is generated from the read character data. The first comparing unit compares the search character data with the candidate character data.

When candidate character data coinciding with the search character data is present as a result of the comparison between the search character data and candidate character data in the first comparing unit, the candidate character string output unit extracts a candidate character string corresponding to the candidate character data.

Furthermore, the character string extraction device according to the present invention includes a special-character-added search character generating unit and a second comparing unit.

When candidate character data coinciding with the search character data is not present as a result of the comparison between the search character data and candidate character data in the first comparing unit, the special-character-added search character generating unit adds special characters to the front and rear ends of the search character data to generate special-character-added search character data. When special characters are continued, the special-character-added search character generating unit replaces a continued special character group with a special character to define the resultant special character as special-character-added search character data.

The second comparing unit compares the special-character-added search character data with the candidate character data.

When candidate character data coinciding with the special-character-added search character data is not present as a result of the comparison between the special-character-added search character data and candidate character data in the second comparing unit, characters adjacent to the added special character before and behind the special character are deleted from the special-character-added search character data to obtain new search character data. Arithmetic operations subsequent to the operation of the special-character-added search character generating unit are repeated.

When the new search character data includes less than two characters as a result of deleting characters adjacent to the added special character before and behind the special character from the special-character-added search character data, the second comparing unit causes searching to be impossible.

Furthermore, the character string extraction device according to the present invention includes: a front-side return search character generating unit; a third comparing unit; a front-side return character deleting unit; a rear-side return search character generating unit; and a fourth comparing unit.

When candidate character data coinciding with the special-character-added search character data is present as a result of the comparison between the special-character-added search character data and candidate character data in the second comparing unit, furthermore, the front-side return search character generating unit returns the front-side one character of the front-side one and rear-side one characters adjacent to the special character most recently deleted in the special-character-added search character data to generate front-side return search character data.

The third comparing unit compares the front-side return search character data with the candidate character data.

When candidate character data coinciding with the front-side return search character data is present as a result of the comparison between the front-side return search character data and candidate character data in the third comparing unit, the front-side return character deleting unit defines the front-side return search character data as new special-character-added search character data. Further arithmetic operations subsequent to the operation of the front-side return search character generating unit are repeated. When candidate character data coinciding with the front-side return search character data is not present as a result of the comparison between the front-side return search character data and candidate character data in the third comparing unit, the front-side return character deleting unit deletes the front-side one character from the front-side return search character data to generate special-character-added search character data.

The rear-side return search character generating unit returns the rear-side one character of the front and rear characters adjacent to the special character most recently deleted in special-character-added search character data to generate rear-side return search character data.

The fourth comparing unit compares the rear-side return search character data with the candidate character data.

When candidate character data coinciding with the rear-side return search character data is present as a result of the comparison between the rear-side search character data and candidate character data in the fourth comparing unit, the candidate character string output unit defines the rear-side return search character data as new special-character-added search character data. Further arithmetic operations subsequent to the operation of the rear-side return search character generating unit are repeated. When candidate character data coinciding with the rear-side return search character data is not present as a result of the comparison between the rear-side search character data and candidate character data in the fourth comparing unit, the candidate character string output unit deletes the rear-side one character most recently returned from the rear-side return search character data to extract a candidate character string corresponding to the candidate character data.

The individual information is individual information held by a discarded household electrical appliance. In particular, the discarded household electrical appliance is a refrigerator.

In the character string extraction device, when candidate character data falling within a range supposed in advance is registered, product numbers of a wide variety of refrigerators can be read with high accuracy.

A character string extraction method according to the present invention is executed in accordance with the operations of the character string extraction device.

The household electrical appliance dismantling device according to the present invention includes: a storage unit; an individual information read unit; a processing information fetching unit; a processing information display unit; a fourth determination unit; a fourth control unit; a fifth determination unit; and a fifth control unit.

The storage unit stores processing information to disassemble a household electrical appliance. The individual information reading unit reads individual information from the household electrical appliance. The processing information fetching unit fetches processing information from the read individual information. The processing information display unit displays the extracted processing information on the household electrical appliance.

The fourth determination unit, based on the displayed processing information, determines whether the household electrical appliance is shifted to a preliminary processing step or a dismantling process. The fourth control unit, based on the determination result obtained by the fourth determination unit, operates such that the fourth control unit directly shifts the household electrical appliance to the dismantling step or shifts the household electrical appliance to the preliminary processing step to perform preliminary processing based on the processing information to the household electrical appliance and then shifts the household electrical appliance to the dismantling step.

The fifth determination unit, in the dismantling step, based on the processing information, determines one disassembling step of predetermined disassembling steps to which the household electrical appliance should be shifted. The fifth control unit operates to shift the household electrical appliance to the determined disassembling step according to a determination result obtained by the fifth determination unit.

In the dismantling device described above, without performing a lot process that requires line switching and a storage area, discarded household electrical appliances are disassembled in incoming order.

A method for dismantling household electrical appliances according to the present invention is performed in accordance with the operations of the dismantling device.

### BRIEF DESCRIPTION OF DRAWINGS

FIG. 1 is a schematic flow chart of a method for dismantling refrigerators according to a first embodiment of the present invention.
FIG. 2 is a main flow chart of the method for dismantling refrigerators according to the first embodiment of the present invention.
FIG. 3 is an explanatory diagram in which individual information of a refrigerator is read by using the refrigerator dismantling device according to the first embodiment of the present invention.
FIG. 4 is an explanatory diagram in which individual information of another refrigerator is read in the first embodiment of the present invention.
FIG. 5 is a plan view of a processing information display unit according to the first embodiment of the present invention.
FIG. 6 is a plan view of another processing information display unit according to the first embodiment of the present invention.
FIG. 7 is an explanatory diagram of still another processing information display unit according to the first embodiment of the present invention.
FIG. 8 is an explanatory diagram for explaining a step of collecting a refrigerant from a refrigerator in the first embodiment of the present invention.
FIG. 9 is an explanatory diagram for explaining a step of collecting a refrigerant from another refrigerator in the first embodiment of the present invention.
FIG. 10 is an explanatory diagram for explaining a step of collecting a refrigerant from a compressor in the first embodiment of the present invention.
FIG. 11 is an explanatory diagram for explaining a standby step for a refrigerator in the first embodiment of the present invention.
FIG. 12 is an explanatory diagram for explaining a standby step for a refrigerator in the first embodiment of the present invention.
FIG. 13 is an explanatory diagram for explaining a standby step for a refrigerator in the first embodiment of the present invention.
FIG. 14 is an explanatory diagram for explaining a standby step for a refrigerator in the first embodiment of the present invention.
FIG. 15 is an explanatory diagram for explaining a standby step for a refrigerator in the first embodiment of the present invention.
FIG. 16 is a block diagram of a character string extraction device for refrigerator according to a second embodiment of the present invention.
FIG. 17 is a hardware block diagram of the character string extraction device for refrigerator according to the second embodiment of the present invention.
FIG. 18 is an explanatory diagram for explaining replacement information in the character string extraction method for refrigerator according to the second embodiment of the present invention.
FIG. 19 is an explanatory diagram for explaining other replacement information in the character string extraction method for refrigerator according to the second embodiment of the present invention.
FIG. 20 is an explanatory diagram for explaining still other replacement information in the character string extraction method for refrigerator according to the second embodiment of the present invention.
FIG. 21 is an explanatory diagram for explaining candidate character data in the character string extraction method for refrigerator according to the second embodiment of the present invention.
FIG. 22 is a conceptual diagram showing a candidate character string in the character string extraction method for refrigerator according to the second embodiment of the present invention.
FIG. 23 is an explanatory diagram for explaining an extracting process in the character string extraction method for refrigerator according to the second embodiment of the present invention.
FIG. 24A is a block diagram of a character string extraction device for refrigerator according to the second embodiment of the present invention.
FIG. 24B is a block diagram of a character string extraction device for refrigerator according to the second embodiment of the present invention.
FIG. 25A is an explanatory diagram for explaining an extracting process in the character string extraction method for refrigerator according to the second embodiment of the present invention.
FIG. 25B is an explanatory diagram for explaining an extracting process in the character string extraction method for refrigerator according to the second embodiment of the present invention.
FIG. 26A is a flow chart of the character string extraction method for refrigerator according to the second embodiment of the present invention.
FIG. 26B is a flow chart of the character string extraction method according to the second embodiment of the present invention.
FIG. 27 is an explanatory diagram of a jig that collects a refrigerant in a third embodiment of the present invention.
FIG. 28 is an explanatory diagram of the jig that collects a refrigerant in the third embodiment of the present invention.
FIG. 29 is an explanatory diagram of an adjusting unit in the third embodiment of the present invention.
FIG. 30 is an explanatory diagram of another adjusting unit in the third embodiment of the present invention.
FIG. 31 is an explanatory diagram of a jig that collects another refrigerant in the third embodiment of the present invention.
FIG. 32 is an explanatory diagram of a jig that collects still another refrigerant in the third embodiment of the present invention.
FIG. 33 is an explanatory diagram of a jig that collects still another refrigerant in the third embodiment of the present invention.
FIG. 34 is an explanatory diagram of a jig that collects still another refrigerant in the third embodiment of the present invention.
FIG. 35 is an explanatory diagram of a jig that collects a different refrigerant in the third embodiment of the present invention.
FIG. 36 is an explanatory diagram of a jig that collects a different refrigerant in the third embodiment of the present invention.
FIG. 37 is an explanatory diagram of a jig that collects a still different refrigerant in the third embodiment of the present invention.
FIG. 38 is an explanatory diagram of a jig that collects a still different refrigerant in the third embodiment of the present invention.
FIG. 39 is an explanatory diagram of a jig that collects another refrigerant in the third embodiment of the present invention.
FIG. 40 is an explanatory diagram of a jig that collects another refrigerant in the third embodiment of the present invention.
FIG. 41 is an explanatory diagram of a jig that collects a refrigerant using a guide unit in the third embodiment of the present invention.
FIG. 42 is an explanatory diagram of the jig that collects the refrigerant using the guide unit in the third embodiment of the present invention.
FIG. 43 is an explanatory diagram of a jig that collects a refrigerant using anther guide unit in the third embodiment of the present invention.
FIG. 44 is an explanatory diagram of a jig that collects a refrigerant using anther guide unit in the third embodiment of the present invention.
FIG. 45 is a schematic flow chart of a method for dismantling household electrical appliances according to a fourth embodiment of the present invention.
FIG. 46 is an explanatory diagram in which individual information of a household electrical appliance is read by using the household electrical appliance dismantling device according to the fourth embodiment of the present invention.
FIG. 47 is a schematic flow chart of a conventional method for dismantling refrigerators.

### DESCRIPTION OF EMBODIMENTS

In a dismantling process of electric appliances typified by refrigerators, operations suitable for part materials of the electric appliances are required. The operations suitable for the part materials require understanding of the specifications of the electric appliances and processing information depending on the specifications.

Products numbers displayed on the electric appliances are utilized to efficiently obtain processing information.

As a method of reading the product numbers displayed on the electric appliances, there is a character recognizing method. Some read character recognition result includes an erroneously recognized character. Various methods are proposed to obtain an accurate output from the character recognition result including the erroneously recognized character.

As an example, in order to obtain an accurate output from a character recognition result read by a scanner or the like, Unexamined Japanese Patent Publication 2001-312693 (Japanese Patent Publication) or the like is proposed. In this literature, a certain specific character is replaced, a certain specific character is deleted, a certain specific character is deleted from a conversion candidate, or an order of conversion candidates is changed in conversion of a character.

However, since a character recognition result read by a scanner or the like is processed to specify a true value, i.e., a true product number, the next problem is posed. More specifically, a lot of steps are expended to find a true character from characters expected to be erroneously recognized. Since a lot of steps are expended, huge amounts of time are required to understand a true product number.

Thus, a character string extraction device and an extraction method therefor described in the second embodiment (will be described later) are used to solve the above problems.

### First Embodiment

A method for dismantling refrigerators and a refrigerator dismantling device according to a first embodiment of the present invention will be described below with reference to the accompanying drawings. The description illustrates one concrete example using a character string extraction device and a character string extraction method according to the present invention.

The same reference numerals denote the same constituent elements described in the background art, and the same description is applicable.

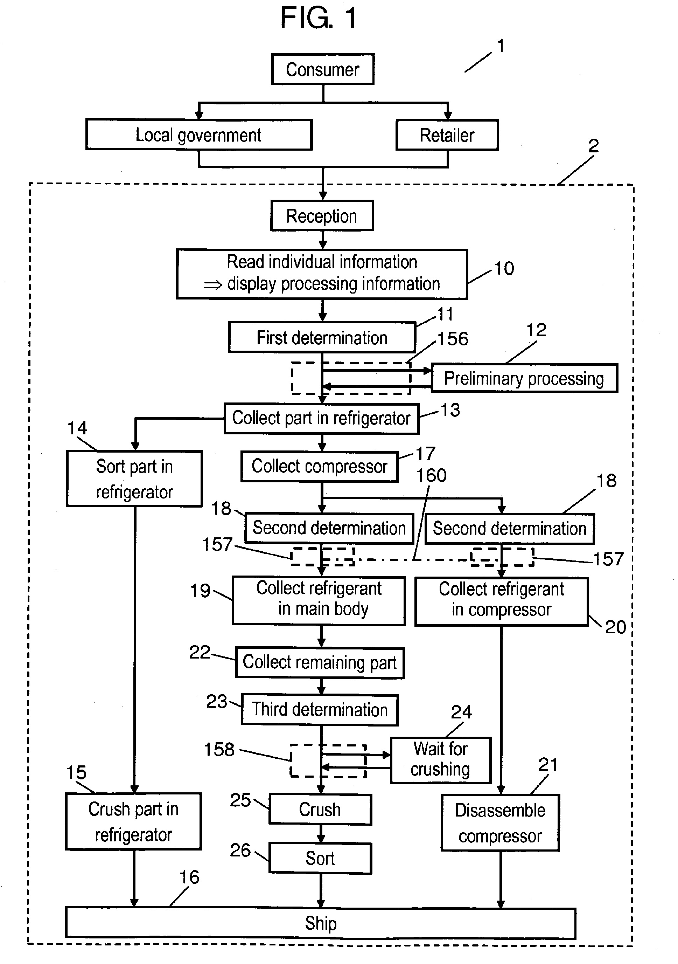

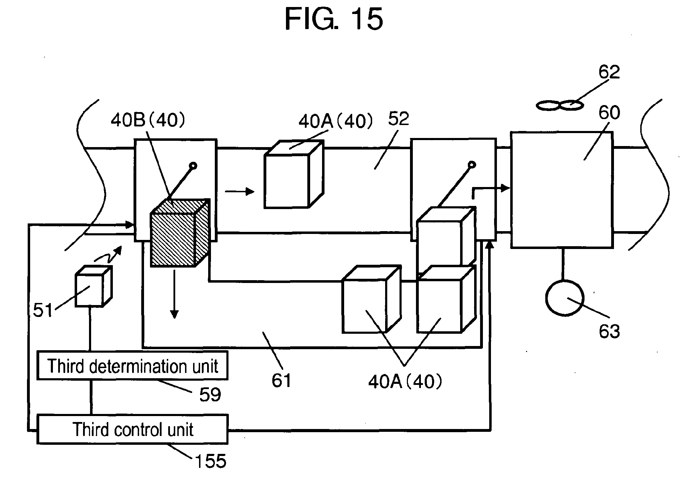

First, an explanation will be made with reference to FIG. 1 to FIG. 15.

As shown in FIG. 1, a refrigerator is collected from market 1 into recycle factory 2. The collected refrigerator passes through step 10 to obtain processing information from individual information. The processing information is information to identify a processing step to be selected when processing steps are selected depending on applied materials in dismantling of a refrigerator.

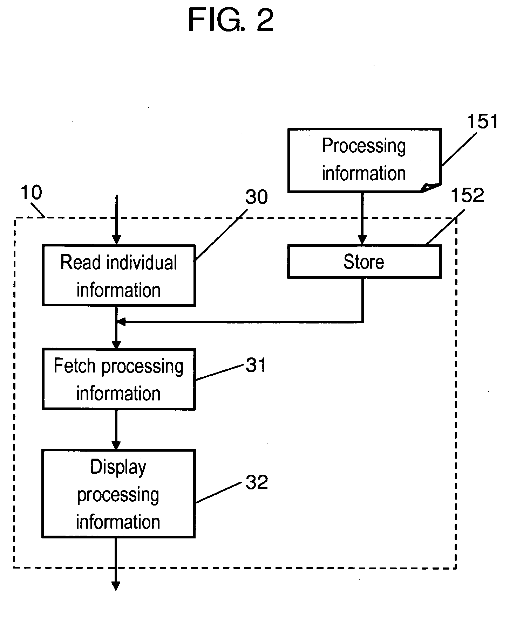

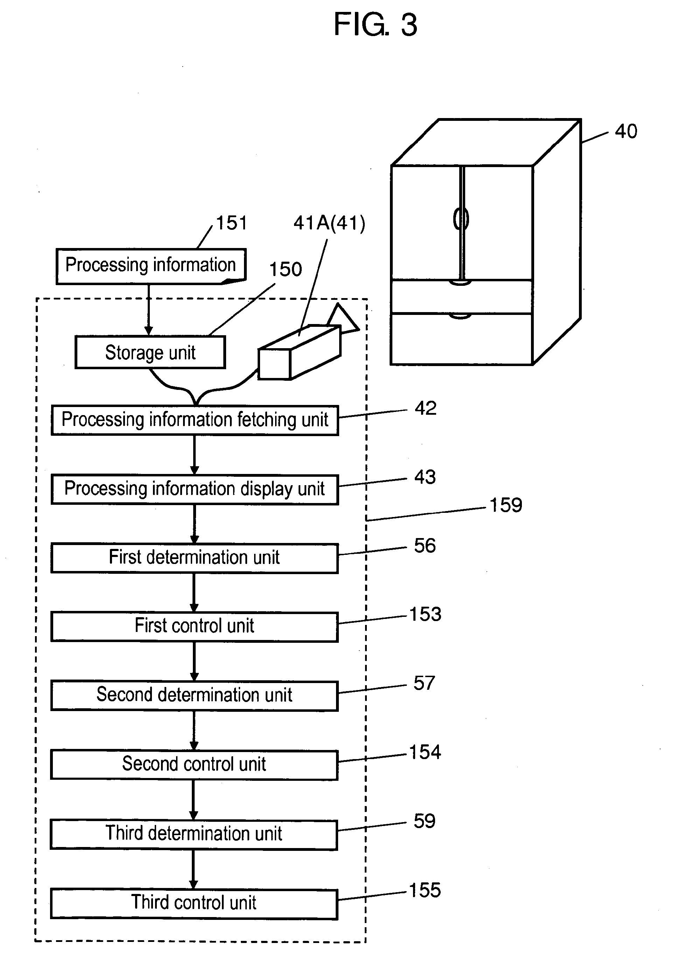

As shown in FIGS. 2 and 3, in storage unit 150, processing information 151 that is associated with individual information of refrigerator 40 to dismantle refrigerator 40 is stored in advance (storing step 152). Storage unit 150 is included in refrigerator dismantling device 159. In individual information reading step 30, individual information from refrigerator 40 is read by individual information reading unit 41. In processing information fetching step 31, processing information to dismantle refrigerator 40 is fetched from the read individual information by processing information fetching unit 42. As shown in FIGS. 2, 3, and 5, in processing information display step 32, the fetched processing information is displayed on refrigerator 40 by processing information display unit 43 through processing information display part 46. When refrigerator 40 is moved while being placed on a palette or the like, the processing information may be displayed on the palette. Alternatively, the processing information may be directly printed on refrigerator 40.

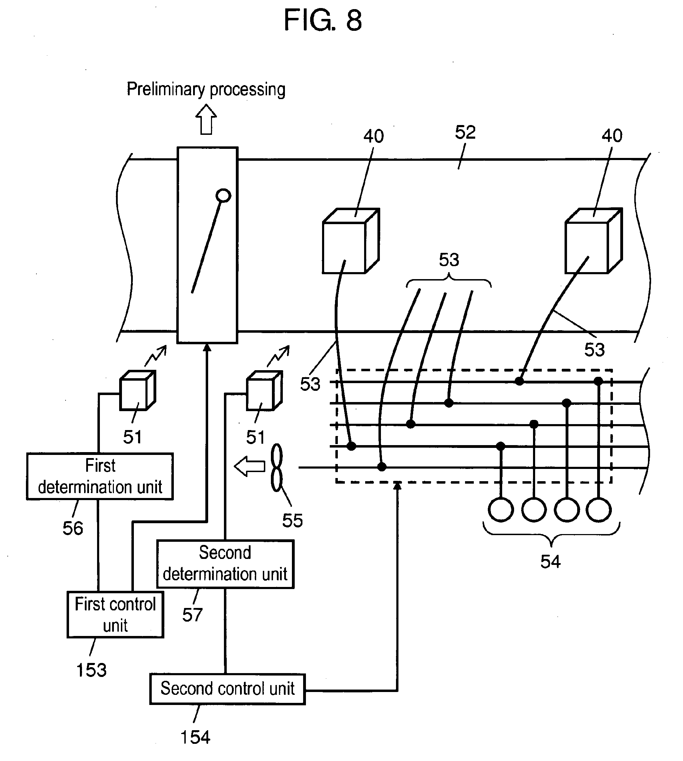

As shown in FIGS. 1 and 8, in first determination step 11, first determination unit 56 determines, based on the processing information, whether refrigerator 40 is shifted to preliminary processing step 12 or refrigerant collecting steps 19 and 20.

Refrigerator 40 that has been determined to be directly shifted to refrigerant collecting steps 19 and 20 as a result of the determination made by first determination step 11 is shifted by first control unit 153 to inside part collecting step 13 in which an inside part is to be collected first (step 156). In this case, inside parts such as shelves and drawers in the refrigerator are collected. The collected inside parts are subjected to inside part selection 14 in units of materials, inside part crushing 15, and shipping 16 as recyclable resources.

"Refrigerator 40 is directly shifted to refrigerant collecting steps 19 and 20" means that refrigerator 40 is shifted to refrigerant collecting steps 19 and 20 without passing through preliminary processing step 12. Unless refrigerator 40 passes through preliminary processing step 12, refrigerator 40 may be shifted to refrigerant collecting steps 19 and 20 through another step on its way.

On the other hand, refrigerator 40 determined to be shifted to preliminary processing step 12 as a result of the determination made by first determination step 11 is shifted by first control unit 153 to preliminary processing step 12 in which preliminary processing is performed based on the processing information (step 156).

The preliminary processing is described here. In the first embodiment of the present invention, machine types positioned as targets of the preliminary processing include a machine type in which a getter material is attached to a thermal insulating material, a machine type characterized by attaching position of a compressor or a way of attaching a compressor, a machine type in which ammonia is used as a refrigerant, and the like.

In the machine type in which the getter material is attached to the thermal insulating material, a plurality of holes are formed from the outside of the housing of the refrigerator into a wall surface configuring the housing. When the getter material is in an active state, the getter material may disadvantageously react with moisture to disadvantageously generate heat. Thus, the getter material is brought into contact with the atmospheric air to change the quality of the getter material from the active state to an inactive state in advance. The change in quality of the getter material requires about 48 hours. Thus, a machine type in which a getter material is mixed in a thermal insulating material is defined as a target of the preliminary processing.

As the machine type characterized by an attaching position of a compressor or a way of attaching a compressor is characteristic, there is a machine type, called a top unit, in which a compressor is located in an upper part of a refrigerator. As other characteristic machine types, there are a machine type in which an iron pipe is used as a connector between a compressor and a pipe constituting a refrigerating cycle, a machine type in which a compressor is fixed to a refrigerator by caulking, and a machine type in which a bolt or a nut cannot be loosened due to the absence of a working space in an operation of removing a compressor.

In the machine type in which a compressor is located in an upper part of a refrigerator, an operation of removing a compressor cannot be easily performed while the refrigerator is in an upright state. Thus, in preliminary processing step 12, a positional relationship that causes an operator to easily remove a compressor is constructed. The operator can easily perform an operation of removing a compressor.

In general, a copper pipe is used as a connector between a compressor and a pipe constituting a refrigerating cycle. Since a copper pipe can be easily processed, the copper pipe serving as a connector is clogged by using an ultrasonic welding tool or a caulking tool. The copper pipe is clogged to have a predetermined width. Alternatively, the copper pipe is clogged at two adjacent positions. The copper pipe clogged with a predetermined width is cut near a center having the predetermined width. Alternatively, the copper pipe clogged at the two adjacent positions is cut to divide the two clogged positions. In this manner, the compressor is removed while both the cut portions of the housing-side pipe and the compressor-side pipe in the refrigerator are clogged.

However, in the machine type in which an iron pipe is used as a connector between a compressor and a pipe constituting a refrigerating cycle, the pipe cannot be easily processed to make it difficult to remove the compressor. Thus, in preliminary processing step 12, a pipe is clogged at two adjacent positions by using a caulking tool dedicated to iron pipe. The pipe clogged at the two adjacent positions is cut to divide the two caulked positions. As a result, the compressor is removed while both the cut portions of the housing-side pipe and the compressor-side pipe in the refrigerator are clogged.

In the machine type in which a compressor is fixed to a refrigerator by caulking, the compressor is removed by releasing the caulking. In the machine type in which a bolt or a nut cannot be loosened due to the absence of a working space in an operation of removing a compressor, the working space is secured by removing a member fixed around the bolt or the nut. Thereafter, after the bolt or the nut is removed, the compressor is removed.

In the machine type using ammonia as a refrigerant, a dedicated step is set. In the machine type using ammonia as a refrigerant, a dismantling process is performed in the dedicated step.

After the above preliminary processing is performed, these refrigerators are shifted to inside part collecting step 13 in which inside parts are to be collected.

Refrigerators of some machine type are shifted to inside part collecting step 13 in which inside parts are to be collected in a state in which compressors are removed.

The refrigerator from which inside parts are collected is shifted to compressor collecting step 17 in which a compressor is to be collected. More specifically, the compressor is separated from the pipe configuring the refrigerating cycle. As a result, the compressor is separated from the refrigerator and collected.

As shown in FIGS. 1 and 8, when the refrigerant is collected from refrigerator 40, in second determination step 18, second determination unit 57 determines a refrigerant that is collected from refrigerator 40 based on the displayed processing information. Second control unit 154 operates according to the determination result of second determination unit 57 to shift refrigerator 40 to a step of collecting a refrigerant from refrigerator 40 (step 157).

Collecting methods for refrigerant are roughly classified into two types. The types use chlorofluorocarbon and isobutane serving as a combustible refrigerant. According to agreements of various regulations, the chlorofluorocarbon is collected into steel bottles serving as collecting containers in units of the compositions. On the other hand, isobutane is diluted to be decreased in density and then released to the atmosphere.

The compressor is separated from the refrigerator. Refrigerant are collected such that a refrigerant remaining in the refrigerator main body and a refrigerant remaining in the compressor are separated from each other. The refrigerant remaining in the refrigerator main body is collected at short times because an amount of refrigerant remaining in the refrigerator main body is extremely small. On the other hand, the refrigerant remaining in the compressor may be eluted in lubricant in large quantity. A considerable amount of time is required to collect all the refrigerant remaining in the compressor.

Thus, as described in the first embodiment of the present invention, the compressor is separated from the refrigerator. Refrigerant are separately collected from the refrigerator and the compressor. As a result, an operation of dismantling a part configuring the housing of the refrigerator is smoothly performed.

In the above explanation, after the housing of the refrigerator is separated from the compressor, the refrigerant to be collected are individually determined in second determination step 18. After the refrigerant to be collected are determined at once in second determination step 18, processing may be performed such that the housing of the refrigerator is separated from the compressor (flow indicated by chain line 160 in FIG. 1).

As shown in FIG. 1, in the refrigerator from which the refrigerant is collected, parts such as pipes and printed circuit boards are collected in remaining part collecting step 22. As a result, only the housing remains as a part of the refrigerator.

On the other hand, the compressor from which the refrigerant is collected is disassembled (compressor disassembling step 21), disassembled parts are sorted by materials configuring the compressor and subjected to shipping 16 as recyclable resources.

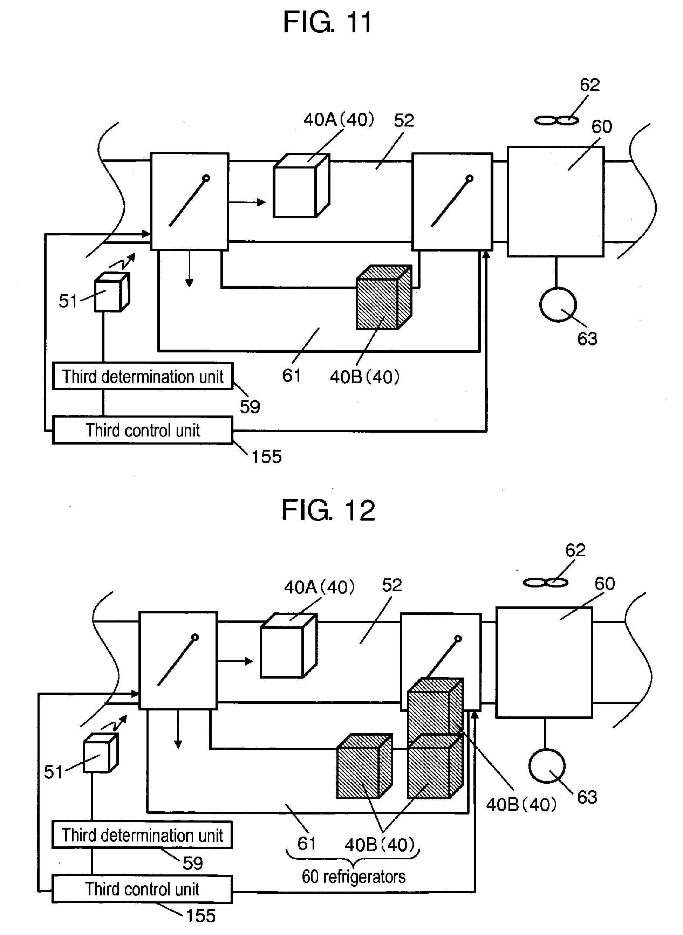

In this manner, according to the determination result of second determination step 18, after the refrigerant are collected from the refrigerator, the refrigerator is shifted to third determination step 23. In third determination step 23, third determination unit 59 (FIG. 11) determines one of crushing step 25 and standby step 24 to which refrigerator 40 is shifted based on the processing information (step 158).

In the first embodiment of the present invention, the refrigerator configured by only the housing is sorted in units of applied thermal insulating materials based on the displayed processing information. More specifically, the thermal insulating materials are roughly sorted by two depending on types of foaming gases used in the thermal insulating materials. More specifically, the types include a gas type that needs to be collected like chlorofluorocarbon and a gas type that needs to be diluted and released to the atmosphere like cyclopentane.

As shown in FIGS. 1 and 11, in third determination step 23, third determination unit 59 determines whether refrigerator 40 is directly shifted to crushing step 25 to be crushed or shifted to standby step 24 (step 158). Third control unit 155 operates, according to the determination result of third determination unit 59, such that refrigerator 40 is shifted to the crushing step or refrigerator 40 is shifted to crushing step 25 through standby step 24 (step 158).

Refrigerators 40 shifted to standby step 24 are shifted to crushing step 25 to be crushed after the number of refrigerators of standby refrigerator 40 group becomes a predetermined number.

Standby step 24 and crushing step 25 will be described in detail.

As described above, crushing methods for housing are considerably different from each other depending on the types of foaming gases used in the thermal insulating materials. When a thermal insulating material using a chlorofluorocarbon (to be referred to as a "chlorofluorocarbon-based thermal insulating material" hereinafter) is used, at the request of various regulations, a crushing chamber is airtightly sealed to prevent the chlorofluorocarbon from being released to the atmosphere. In contrast to this, when a thermal insulating material using cyclopentane (to be referred to as a "cyclopentane-based thermal insulating material" hereinafter) is used, in terms of the securing of safety in an operation, cyclopentane is diluted with the air and then released to the atmosphere.

When conflicting operations are performed in the same step, applied facility requires a switching operation. When the switching operation of the facility is performed for every refrigerator, operating efficiently extremely deteriorates. Thus, the first embodiment of the present invention employs a small lot switching method in which facilities are not switched until the number of housings of refrigerators 40 using the same facility reaches a predetermined number.

As a concrete example, when a chlorofluorocarbon-based thermal insulating material is crushed in crushing step 25, when the refrigerator using the chlorofluorocarbon-based thermal insulating material is shifted to third determination step 23, the refrigerator is shifted to crushing step 25. On the other hand, when the refrigerator using the cyclopentane-based thermal insulating material is shifted to third determination step 23, the refrigerator is shifted to standby step 24. At this time, in crushing step 25, an operation chamber is airtightly sealed, and the housing of the refrigerator is crushed while collecting chlorofluorocarbon.

As a result of the above operations, when about 60 refrigerators using, for example, a cyclopentane-based thermal insulating material are accumulated, the step is switched to the next step in third determination step 23. More specifically, the refrigerator using the cyclopentane-based thermal insulating material is shifted to crushing step 25. The refrigerator using the chlorofluorocarbon-based thermal insulating material is shifted to standby step 24.

Thereafter, all the accumulated refrigerators using the cyclopentane-based thermal insulating material are taken out of standby step 24. All the refrigerators accumulated in standby step 24 are refrigerators using the chlorofluorocarbon-based thermal insulating material. At this time, in third determination step 23, the step is switched to the next step. More specifically, the refrigerator using the chlorofluorocarbon-based thermal insulating material is shifted to crushing step 25. The refrigerator using the cyclopentane-based thermal insulating material is shifted to standby step 24.

When the small lot switching method described above is used, the number of times of lines is minimized. For this reason, the dismantling process for refrigerator can be efficiently performed.

The refrigerators crushed as described above are sorted into different materials by a wind power sorter or a magnetic sorter that is conventionally used in sorting step 26, and is subjected to shipping 16 as recyclable resources.

Main parts will be described below.

In order to fetch processing information of a refrigerator, the following operations are required.

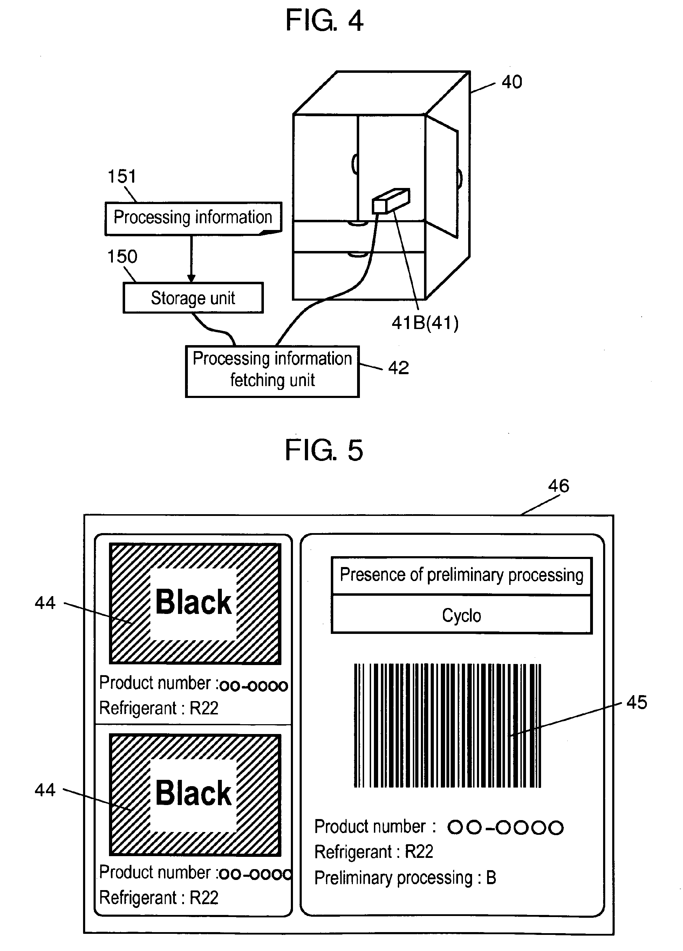

As a first operation, individual information that specifies a machine type of a refrigerator serving as a target of the operation is acquired. As a concrete example, as shown in FIGS. 3 and 4, the machine type of refrigerator 40 is specified based on an appearance video picture of refrigerator 40. Alternatively, the machine type of refrigerator 40 is specified by reading a product number stuck to refrigerator 40. The machine type of refrigerator 40 can be more accurately specified by reading the production number. In this operation, as individual information reading unit 41, camera 41A that photographs the appearance of refrigerator 40 or scanner 41B that reads a product number are used. The read individual information is sent to processing information fetching unit 42.

A variety of refrigerators 40 that have been manufactured and sold by various manufacturers for years are carried into recycle site where refrigerators 40 are dismantled. Of course, different product numbers are given by the manufacturers, respectively. Thus, it is important that refrigerators 40 are arranged such that processing information for dismantling process of refrigerators 40 can be efficiently fetched from individual information such as the obtained appearance video picture of refrigerators 40 or the product numbers of refrigerators 40.

A second operation is to form a database of processing information.

In order to efficiently perform a dismantling process for refrigerators, it is important to accumulate information related to a processing operation and effectively utilize the information as processing information.

As described above, in order to select an optimum processing method from different processing methods, at least information representing the types of thermal insulating materials used in refrigerators and the types of refrigerant used in the refrigerators are essential.

Furthermore, processing information also needs to have an attaching position of a compressor serving as a target of preliminary processing and a way of attaching the compressor.

The information strung to processing information may be arbitrarily added each time an item required to process a refrigerator is generated.

In this manner, a database in which processing information required to dismantle a refrigerator is strung to individual information of the refrigerator is constructed.

A third operation is to rapidly combine individual information and processing information to each other.

More specifically, the third operation is to construct processing information fetching unit 42 that efficiently fetches the processing information accumulated by the second operation from the individual information obtained by the first operation. The details will be described in the second embodiment of the present invention.

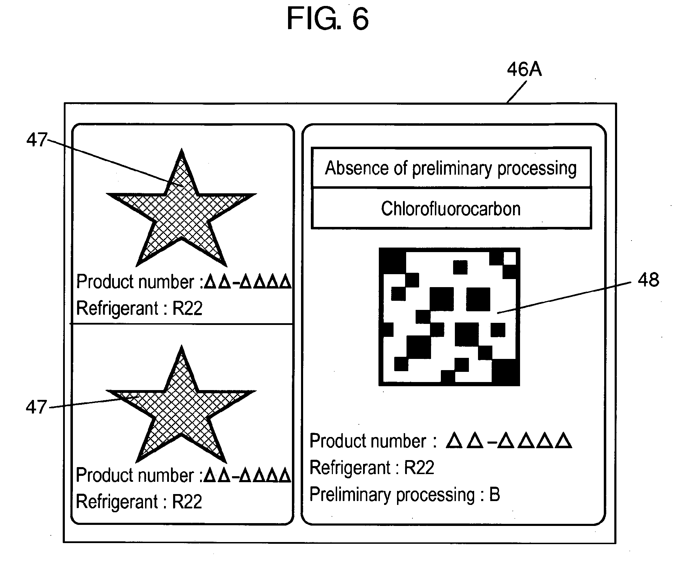

As a fourth operation, processing information accurately fetched from the constructed database need to be displayed on each refrigerator. FIGS. 5 and 6 show an example of processing information display parts 46 and 46A showing processing information. Processing information display parts 46 and 46A are formed by processing information display unit 43.

In FIG. 5, reference symbol 44 denotes the type of a refrigerant, and 45 denotes the type of a thermal insulating material. Different refrigerant types 44 are displayed in different colors, respectively. Alternatively, in FIG. 6, different refrigerant types 47 are displayed by different symbols or graphics, respectively. The information is displayed such that relationships between the colors, the symbols, and the graphics and jigs used in the step of collecting a refrigerant can be understood at first sight. More specifically, when R12 is displayed in yellow, a yellow hose is used as a jig for collecting a refrigerant, or a steel bottle that is marked in yellow is used. Similarly, R22 is displayed in black. R134a is displayed in blue. R502 is displayed in green. Isobutane is displayed in red. In this manner, even an inexperienced operator can understand a jig to be used at first sight. A skilled operator is expected to prevent a jig to be used from being misunderstood. The operator becomes to be able to easily extract a necessary jig from a large number of existing jigs. Thus, operating efficiency is also improved. As shown in FIG. 6, a symbol or a graphic may be used to distinctively display refrigerant. As displays to discriminate refrigerant from each other, these symbols or graphics are outstandingly attached to refrigerators or jigs, respectively. For example, R12 is displayed as a triangle. R22 is displayed as a star. R134a is displayed as a square.

Similarly, the type of a thermal insulating material is represented by barcode 45 (FIG. 5) or QR code 48 (FIG. 6).

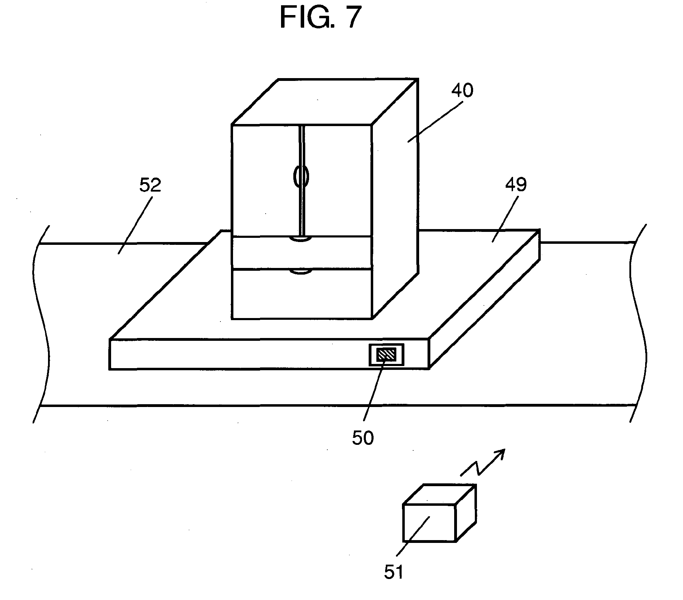

In addition, as another example, as processing information display parts 46 and 46A, as shown in FIG. 7, IC chip 50 can also be used. For example, the processing information is written in IC chip 50. As shown in FIG. 7, IC chip 50 is attached to palette 49 to convey refrigerator 40. In the dismantling step for refrigerator 40, reader 51 that reads data written in IC chip 50 is arranged at an important point. When palette 49 on which refrigerator 40 is placed becomes close to each processing step, reader 51 reads necessary data. The details of the read data are displayed on reader 51. IC chip 50 is economical because IC chip 50 can be recycled.

Alternatively, processing information may be directly printed on a refrigerator.

More specifically, fetched processing information may be directly displayed on a refrigerator by processing information display unit 43, or may be indirectly displayed on the refrigerator through processing information display parts 46 and 46A, IC chip 50, or the like.

The step of collecting a refrigerant will be described below.

FIG. 8 shows refrigerator 40 shifted to refrigerant collecting steps 19 and 20 through first determination step 11 by first determination unit 56. In the first embodiment, one conveyor is used as conveyor 52 that conveys refrigerator 40, and a jig that collects a refrigerant is prepared for each refrigerant type. The jig that collects a refrigerant includes hose 53 serving as a communication path, steel bottle 54 serving as a collecting container, and fan 55 serving as a stirring unit. Hose 53, steel bottle 54, and fan 55 may be collectively described as jigs 53, 54, and 55. By using the step, a result of second determination unit 57 is reflected on second control unit 154. More specifically, different colors, symbols, and graphics depending on the types of refrigerant are displayed on jigs 53, 54, and 55 that collect refrigerant. Second control unit 154 notifies an operator of the different colors, symbols, and graphics depending on the types of refrigerant. As a result, even an inexperienced operator can understand a jig to be used at first sight. A skilled operator is expected to prevent a jig to be used from being misunderstood. The operator becomes to be able to easily extract a necessary jig from a large number of existing jigs. Thus, improvement of operating efficiency can be obtained. Furthermore, in the refrigerator dismantling device according to the present invention, since one conveyor is installed as conveyor 52, an area in which the refrigerator dismantling device 40 is installed is also small.

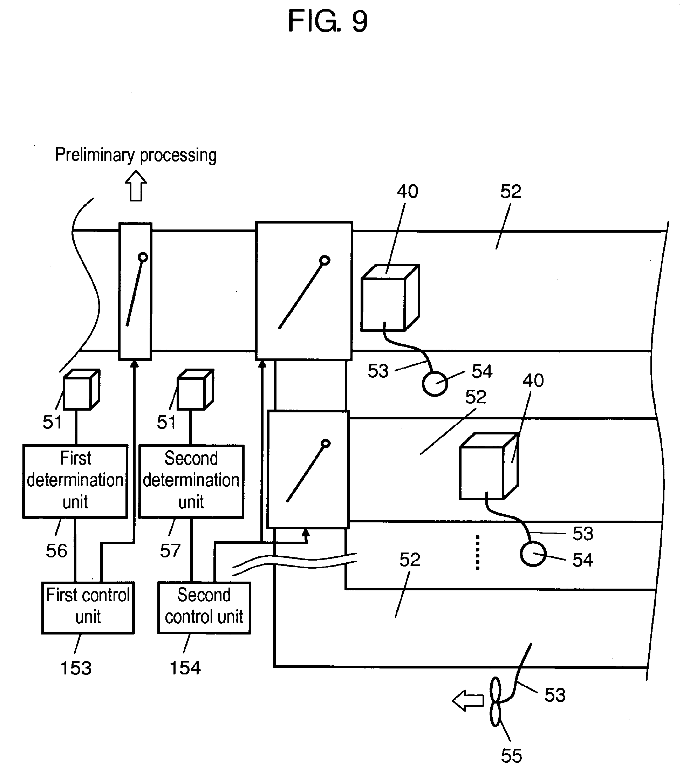

In contrast to this, in the step shown in FIG. 9, conveyors 52 are installed for the types of refrigerant, respectively. In the step, jigs 53, 54, and 55 that collect refrigerant are arranged on conveyors 52, respectively. More specifically, the number of necessary jigs 53, 54, and 55 that collect refrigerant is equal to the number of types of refrigerant. In this case, an area in which facilities to dismantle refrigerator 40 are installed increases. However, by using the step shown in FIG. 9, refrigerator 40 is shifted to conveyor 52 depending on a determination result of second determination unit 57 by second control unit 154. Thus, the step can prevent an operator from misunderstanding jigs 53, 54, and 55. The step can advantageously and simultaneously process a large number of refrigerators 40 in parallel with each other.

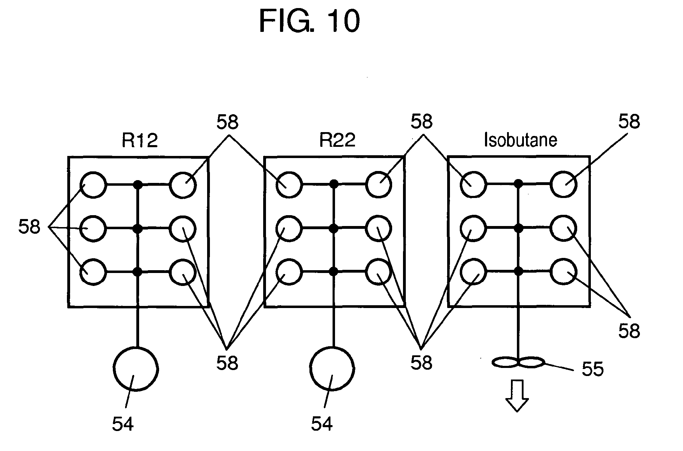

FIG. 10 is a step of collecting a refrigerant from compressor 58. Compressors 58 using refrigerant of the same type are rarely continuously collected from a plurality of refrigerators, respectively. A considerable amount of time is required to collect refrigerant from each of compressors 58. Thus, collected compressors 58 are arbitrarily accumulated on working tables that are sorted by the types of refrigerant. It is efficient that the refrigerant are sequentially collected from compressors 58.

The third determination step using third determination unit 59 to the crushing step will be described below with reference to FIG. 1 and FIGS. 11 to 15.

As a result of above-mentioned third determination step 23 obtained by third determination unit 59, refrigerators 40 from which refrigerant have been collected are sorted by third control unit 155 into the following two cases. One case, refrigerator 40 is directly shifted to crushing chamber 60 in which refrigerator 40 is crushed. In the other case, refrigerator 40 is shifted to standby position 61 at which standby step 24 is formed. For the descriptive convenience, a refrigerator using a chlorofluorocarbon-based thermal insulating material is defined as refrigerator 40A. A refrigerator using a cyclopentane-based thermal insulating material is defined as refrigerator 40B.

In FIG. 11, refrigerator 40A using the chlorofluorocarbon-based thermal insulating material is shifted to crushing chamber 60. Refrigerator 40B using the cyclopentane-based thermal insulating material is shifted to standby position 61. At this time, since fan 62 arranged in crushing chamber 60 is stopped, chlorofluorocarbon is collected into steel bottle 63 serving as a collecting container. As steel bottle 63 serving as a collecting container, a container such as a metal barrel may be used.

When the operation is advanced, refrigerators 40B to be accumulated at standby position 61 are accumulated until the number of refrigerators reaches a predetermined number. In the first embodiment of the present invention, a predetermined number of refrigerators is set as 60 (FIG. 12).

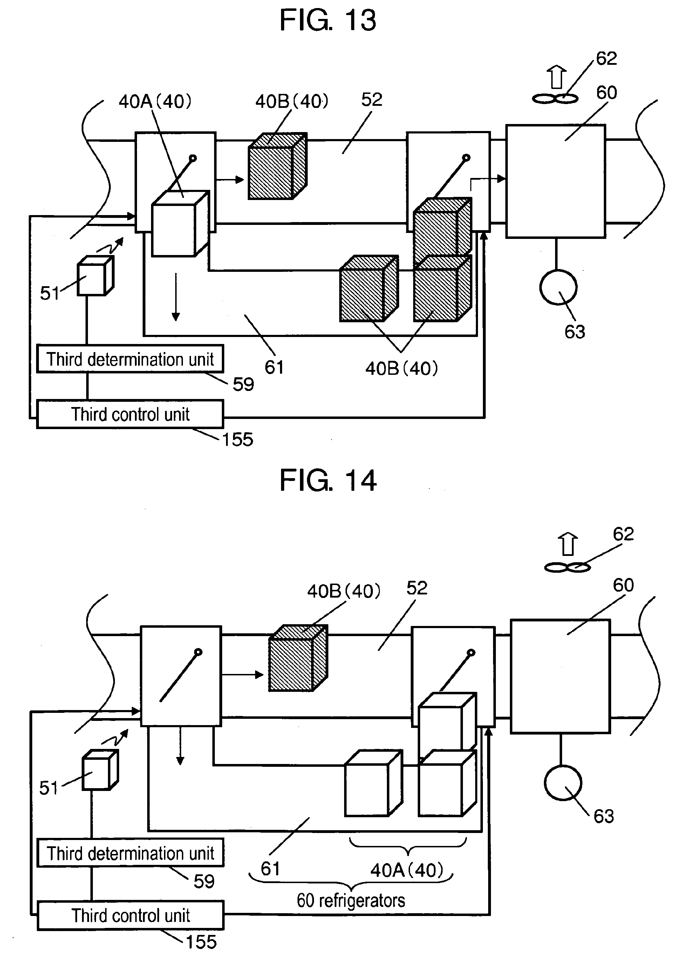

As a result, third control unit 155 sends refrigerator 40B being standby at standby position 61 to crushing chamber 60. Third control unit 155 shifts refrigerator 40A to standby position 61. When Refrigerator 40B is sent from refrigerant collecting step 19, refrigerator 40B is directly shifted to crushing chamber 60 by third control unit 155. In crushing chamber 60, an operation of collecting chlorofluorocarbon into steel bottle 63 is stopped. Fan 62 arranged in crushing chamber 60 is operated to release cyclopentane or the like (FIG. 13) to the atmosphere.

The operation advances to send out all refrigerators 40B accumulated at standby position 61. Sixty refrigerators 40A are accumulated at standby position 61 (FIG. 14).

As a result, refrigerators 40A are directly shifted to crushing chamber 60 by third control unit 155 again. Third control unit 155 operates to shift refrigerator 40B to standby position 61.

When the small lot switching method is employed, the number of times of switching between operation environments of crushing chamber 60 is minimized. Thus, when the small lot switching method is employed, refrigerators 40A and 40B are efficiently subjected to a dismantling process.

As is apparent from the above description, when the method for dismantling refrigerators and the refrigerator dismantling device according to the first embodiment of the present invention are used, refrigerators are sequentially subjected to the dismantling process in order of coming to a recycling factory. Thus, a space that is required in a conventional lot process and that stores pending refrigerators therein is not required. In other words, a total floor area in which dismantling facilities for refrigerator are installed decreases.

Since processing freshness of refrigerators is improved, a dismantling rate of refrigerators increases in a recycling factory. A switching loss generated when lot processes are switched is prevented from being generated. A moving loss that has been generated to move a refrigerator to be processed from a storage place to the processing step is prevented from being generated. More specifically, a dismantling processing ability of refrigerators in a recycling factory is improved.

More specifically, by using a method for dismantling refrigerators and a refrigerator dismantling device according to the first embodiment of the present invention, improvements of a spatial element and a time element are provided.

In particular, in collection of refrigerant, a combustible refrigerant required to be diluted and released to atmosphere and chlorofluorocarbons required to be collected in units of types are handled. In refrigerant collection, jigs used depending on the types of refrigerant are discriminated by colors or shapes such that even an inexperienced operator can understand a handling method at first sight. Alternatively, a method for dismantling a refrigerator is mechanically determined by using an IC chip to make it possible to safely and accurately perform the operations.

The first embodiment describes the dismantling process for refrigerator. The first embodiment can also be applied to other electric appliances, for example, television receivers, air conditioning apparatuses, washing machines, and the like. In this case, items and references determined in the first determination unit to the third determination unit that are employed in the first embodiment are arbitrarily set depending on electric appliances serving as targets.

For example, in a television receiver, the first determination unit may make a determination by a method of displaying an image. As a concrete index, a cathode ray tube display device, a plasma display device, a liquid crystal display device, or the like can be conceived.

As criteria of the second determination unit, the type of a glass material configuring a display unit of each display device and a cutting method for the glass material are conceived. Alternatively, as the criteria of the second determination unit, the presence/absence of an additional function typified by a hard disk drive may be used. In the above settings, by using the same facilities, a television receiver or the like using a cathode ray tube is subjected to a dismantling process in incoming order.

In an air conditioning apparatus, like the refrigerator described above, the type of a refrigerant may be used as a criterion. In the above settings, like refrigerators, by the same facilities, air conditioning apparatuses are subjected to a dismantling process in incoming order.

In case of washing machines, as a criterion, the presence/absence of advanced functions such as a heat-pump unit and an ion generator may be used. In the above settings, by the same facilities, washing machines are subjected to a dismantling process in incoming order.

The criteria may be arbitrarily set depending on electric appliances to be processed regardless of the above description. Pieces of processing information that target the electronic appliances need only be arbitrarily set depending on the targeted electric appliances.

### Second Embodiment

A character string extraction device and a character string extraction method according to the second embodiment of the present invention will be described below with reference to the accompanying drawings.

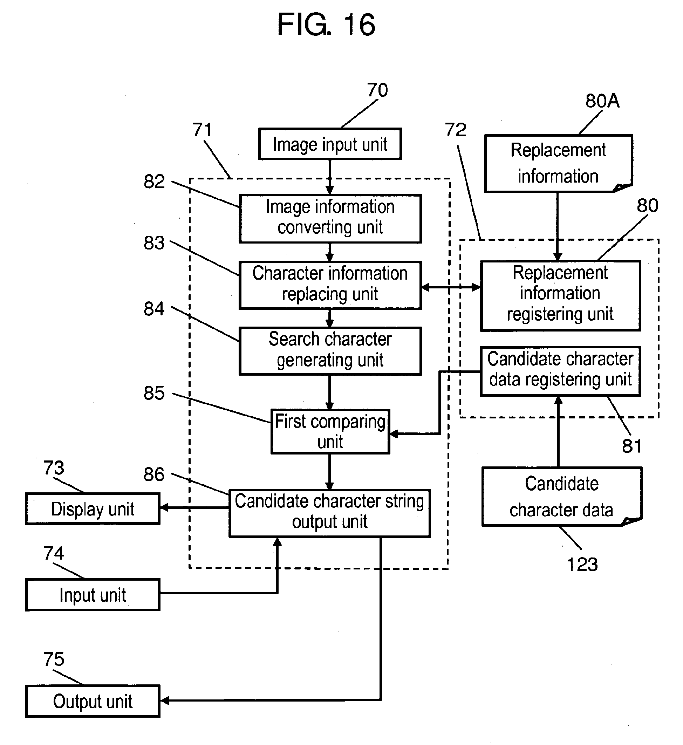

FIG. 16 is a block diagram showing the character string extraction device according to the second embodiment of the present invention. A flow of the character string extraction method will be also described with reference to FIG. 16.

In the drawing, image input unit 70 reads a product number displayed on a refrigerator that is a discarded electric appliance. Image input unit 70 can be produced by a scanner. Arithmetic operation unit 71 calculates a candidate character string from image information read by image input unit 70. The candidate character string will be described later. Data used in arithmetic operation unit 71 is registered in registering unit 72. Display unit 73 displays a result calculated by arithmetic operation unit 71. Display unit 73 can be produced by a display. For example, when arithmetic operation unit 71 is configured by an integrated personal computer, display unit 73 is configured together with arithmetic operation unit 71. Input unit 74 performs input instruction to output a result calculated by arithmetic operation unit 71 from output unit 75. Output unit 75 can be produced by a printer or a writing device for a recording medium such as an IC chip.

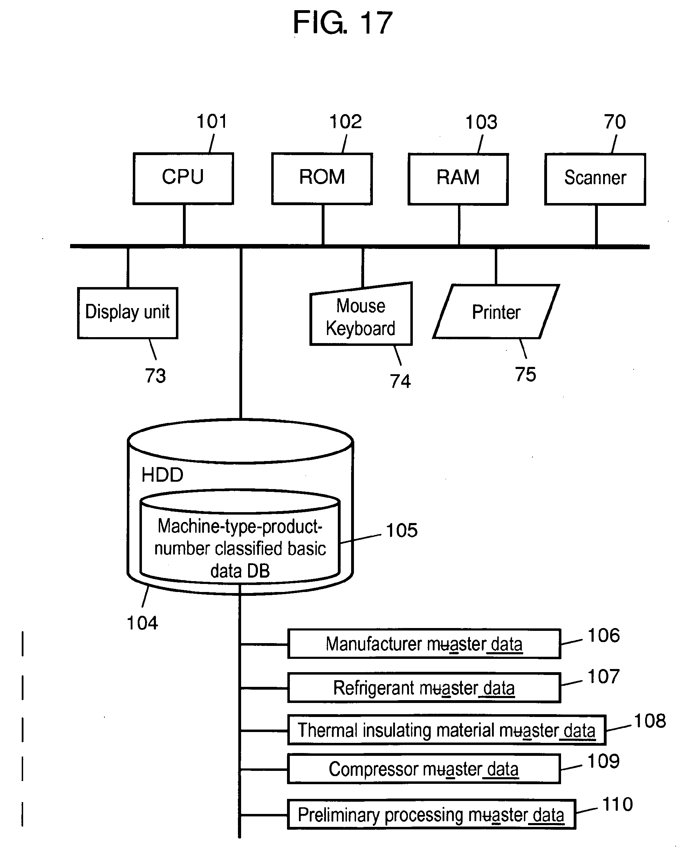

A hardware configuration that produces the character string extraction device is shown in FIG. 17. As shown in the drawing, the character string extraction device according to the second embodiment of the present invention includes CPU 101, ROM 102, RAM 103, image input unit 70 configured by a scanner, display unit 73, hard disk unit (described as an "HDD" in the drawing) 104, input unit 74 configured by a mouse, a keyboard, and the like, output unit 75 configured by a printer, and the like.

CPU 101 operates according to a program. ROM 102 stores a basic program. RAM 103 temporarily stores other programs and data. The scanner is image input unit 70 that reads image information. Hard disk unit 104 stores various programs and data. Input unit 74 is a keyboard, a mouse, or the like. Output unit 75 is a printer or a writing device for an IC chip.

Hard disk unit 104 has database (indicated as a "DB" in the drawing) 105 in which machine-type-product-number-classified basic data is stored. Database 105 has various master data. As an example of the various master data, the following is given. Maker master data106 that stores a manufacturer that manufactures a refrigerator. Refrigerant master data 107 that stores a refrigerant used in the refrigerator. Thermal insulating material master data 108 that stores a thermal insulating material used in the refrigerator. Compressor master data 109 that stores a compressor used in the refrigerator. Preliminary processing master data 110 that stores various preliminary processing required by a refrigerator and illustrated in the first embodiment.

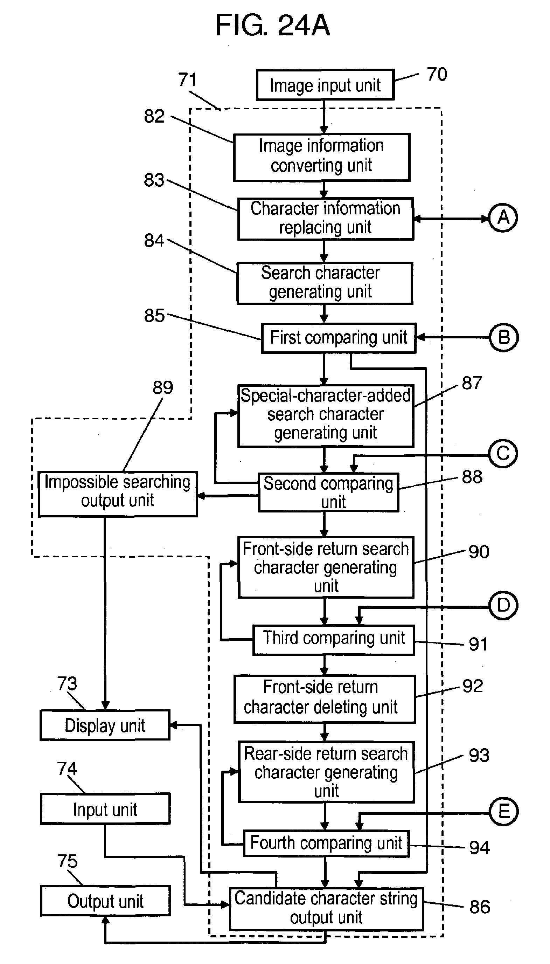

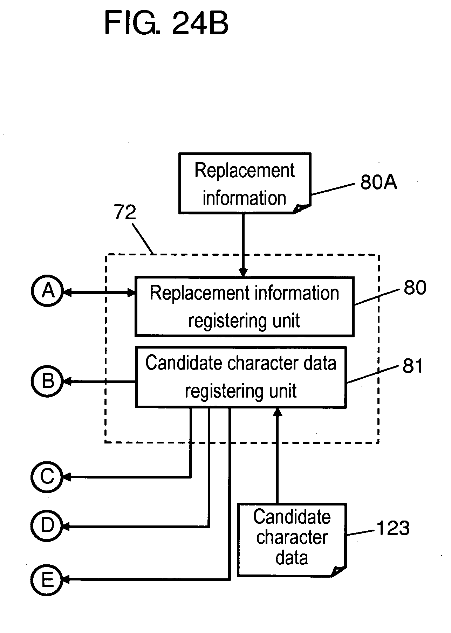

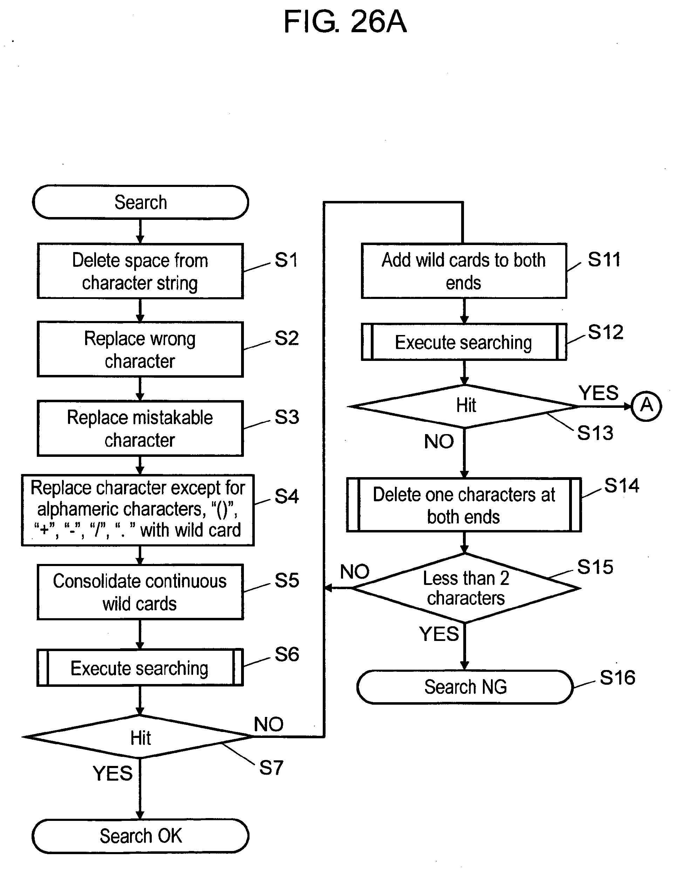

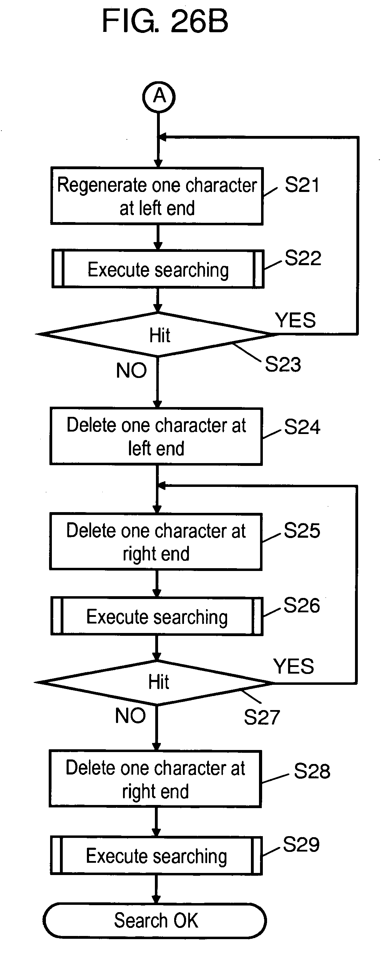

Operations of the character string extraction device including the above components will be described below by mainly using block diagrams in FIGS. 16, 24A, and 24B and flow charts in FIGS. 26A and 26B.

### About Preparation in Advance

As a preparation in advance, a replacement information registering step and a candidate character data registering step are performed. In the replacement information registering step, replacement information 80A is registered in replacement information registering unit 80. In the candidate character data registering step, candidate character data 123 is registered in candidate character data registering unit 81.

In the replacement information registering step, replacement information 80A to replace a specific character with a designated character with respect to character information to be expected to be erroneously recognized is registered replacement information registering unit 80 in advance.

The designated character means a character generally used in an electric appliance from which a product number is read. In general, alphabets, in particular, capital alphabets, Arabic numerals, and the like are popularly used. Furthermore, characters typified by "- (hyphen)" and coupling capital alphabets to Arabic numerals are also frequently used.

The specific character means a "character that is apparently wrong", a "character that is apparently mistakable", and a "character that is mistakable but is difficult to be discriminated" in comparison with the designated character when the character information is read from the image information by an OCR (Optical Character Reading device) or the like.

Designated characters and specific characters vary depending on target electric appliances. The differences include regional characteristics. As the designated characters, Greek alphabets, Greek numerals, Arabic alphabets, Hangul characters, or the like may be used. The ranges of the designated character and the specific character are specified by examining a target electric appliance in advance.

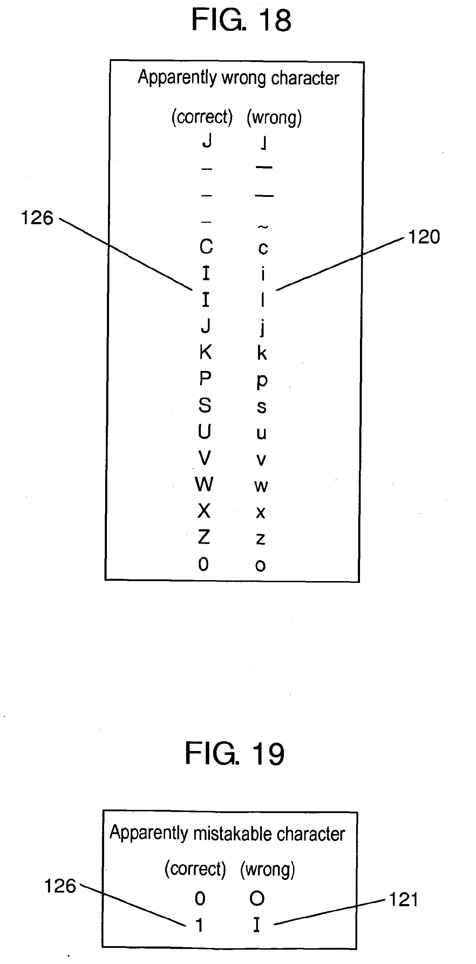

In the second embodiment of the present invention, a refrigerator is used as a target product. In this case, "character that is apparently wrong" (120), "character that is apparently mistakable" (121), and "character that is mistakable but is difficult to be discriminated" (122) are positioned as specific characters. Specific characters 126 corresponding to specific characters 120, 121, and 122 are defined in advance. The contents are shown in FIGS. 18, 19, and 20.

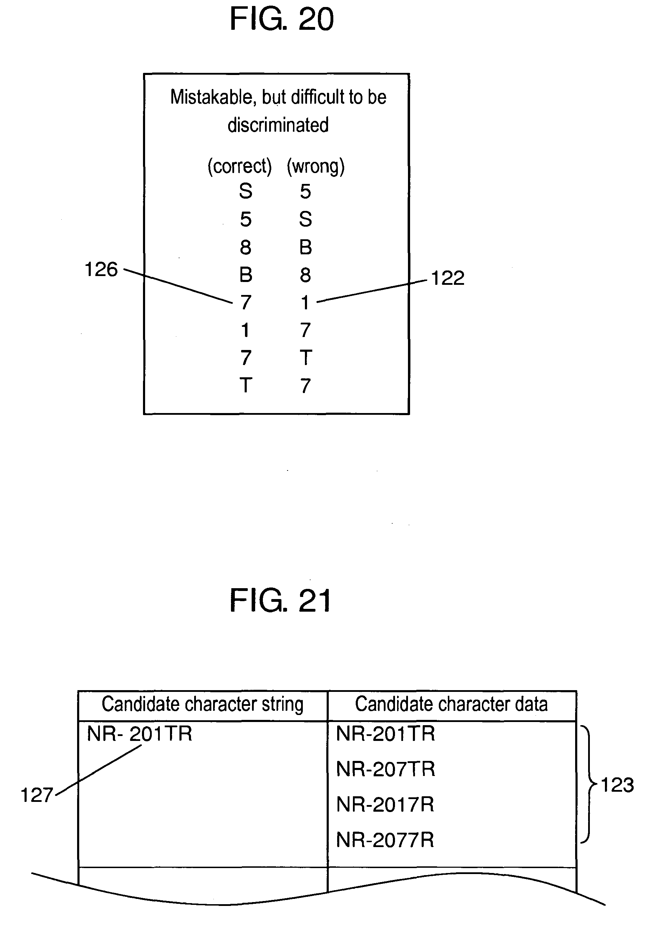

When specific characters 126 are defined, candidate character data 123 supposed when Specific characters 126 are used is derived for candidate character string 127 (FIG. 21) that is finally wanted. An example of supposed candidate character data 123 is shown in FIG. 21. In the candidate character data registering step, candidate character data 123 is registered in candidate character data registering unit 81 in advance.

### About Primary Search

A procedure of extracting a candidate character string from a product number displayed on a discarded refrigerator will be described below.

In an image information converting step, image information read by image input unit 70 shown in FIG. 16 is converted into character information by image information converting unit 82. As shown in FIG. 26A, when the character information includes a space, the space is deleted (S1). In a character information replacing step, when the character information converted by image information converting unit 82 includes specific characters 120, 121, and 122, the specific characters 120, 121, and 122 are replaced with specific characters 126 by character information replacing unit 83. In the character information replacing step, when the character information converted by image information converting unit 82 does not include specific characters 120, 121, and 122, the converted character information is positioned as read character data by character information replacing unit 83 (S2 and S3).

In a search character generating step, a predetermined character of the read character data is replaced with a special character by search character generating unit 84 (S4). In addition, in the search character generating step, when special characters are continued, a continued special character group is further replaced with one special character by search character generating unit 84. In the search character generating step, search character data is generated from read character data (S5).

The predetermined character mainly indicates a character except for a designated character. As described above, when target electric appliances are examined in advance, a range that is not included in the designated character is found.

In the second embodiment of the present invention, when a discarded refrigerator is set as a target product, characters except for alphameric characters, "()", "+", "-", "/" and "." are positioned as predetermined characters. As a result of evaluation by a present applicant, when a discarded refrigerator is set as a target product, a product number using kanji, katakana, or hiragana is not found. Thus, a designated character is set with a central focus on a capital alphabet and an Arabic numeral. As a special character replaced with the predetermined characters, i.e., a so-called wild card, "%" or "*" is used.

In a first comparing step, the search character data and the candidate character data are compared with each other by first comparing unit 85 (S6). When candidate character data coinciding with the search character data is present as a result (S7) of the comparison, candidate character string output unit 86 extracts a candidate character string corresponding to the candidate character data.

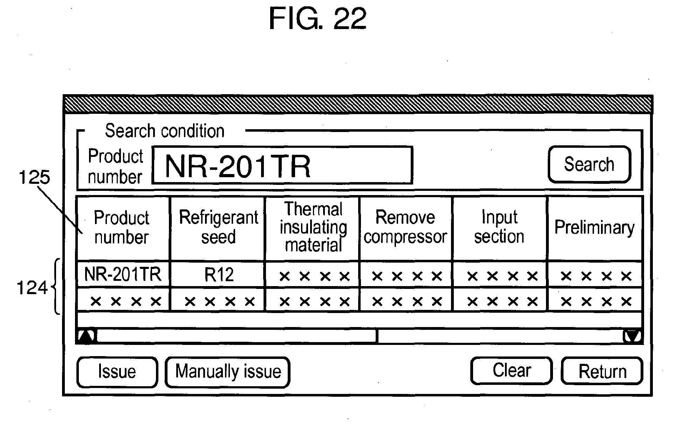

The candidate character string extracted as described above output from candidate character string output unit 86 is displayed on display unit 73. FIG. 22 shows an example of candidate character string 124.

When an operator operates input unit 74, target product number 125 configured by candidate character string 124 displayed on display unit 73 is selected. When a touch panel display is used as input unit 74, the display is used as both input unit 74 and display unit 73. As a result, selected product number 125 is output to output unit 75 together with processing information.

From output unit 75, processing information display units 43 and 46 as shown in FIGS. 5 and 6 are output. In place of processing information display units 43 and 46, a recyclable recording medium in which necessary items are stored may be output. As the recyclable recording medium, IC chip 50 can be used.

The replacement information registering step and the candidate character data registering step described as advance preparation can also use the same contents for electric appliances such as a television receiver, an air conditioning apparatus, and a washing machine except for a discarded refrigerator.

When the contents registered in replacement information registering unit 80 and candidate character data registering unit 81 are arbitrarily updated, searching accuracy is more improved.

A range of characters predicted to be erroneously recognized is determined by characters employed in electric appliances to be discarded.

### About Concrete Example of Primary Searching

A concrete example of primary searching will be more described.

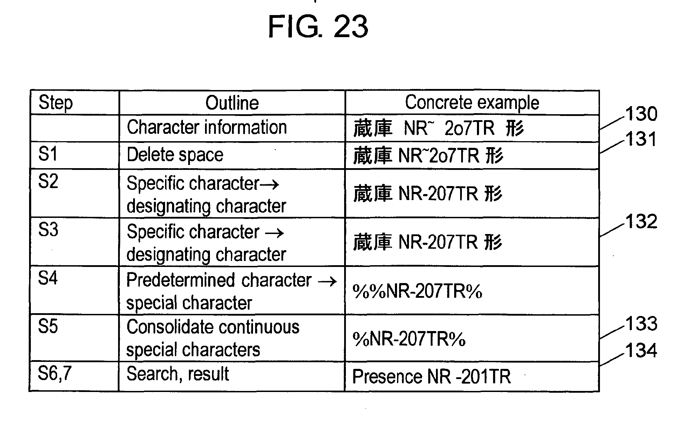

The image information read by image input unit 70 is converted into character information through image information converting unit 82. Converted character information 130 is shown in FIG. 23.

Converted character information 130 includes a space. In order to make converting (that will be described later) easy, the space is deleted from character information 130. Character information 131 from which the space is deleted includes specific characters 120 and 121 ("character that is apparently wrong" and "character that is apparently mistakable") shown in FIGS. 18 and 19. Thus, character information 131 replaces "∼" with "-" and replaces "o" with "0". The result is read character data 132.

In a search character generating step, a predetermined character of read character data 132 is replaced with a special character. In addition, in the search character generating step, when special characters are continued, a continued special character group is further replaced with one special character. In the search character generating step, search character data 133 is generated from read character data. In the second embodiment, as the special character, "%" is used.

In a first comparing step, search character data 133 and the candidate character data are compared with each other. When candidate character data coinciding with search character data 133 is present as a result of the comparison, candidate character string 134 corresponding to the candidate character data is extracted by candidate character string output unit 86.

Since "N-201TR" is obtained as candidate character string 134 as a result of the comparison, the searching is ended.

### About Secondary Searching

If candidate character data coinciding with search character data is not present in the first comparing step, the next flow is performed based on a block diagram shown FIG. 24.

In response to the result (S7) in the first comparing unit in first comparing unit 85, in a special-character-added search character generating step, special-character-added search character data is generated from search character data by special-character-added search character generating unit 87 (S11). The special-character-added search character data is obtained by adding special characters to the front and rear ends (both the ends) of search character data. If special characters are continued, after a continued special character group is further replaced as one special character, special-character-added search character data is generated from the search character data.

In a second comparing step, the special-character-added search character data and the candidate character data are compared with each other by second comparing unit 88. More specifically, searching is executed (S12). When candidate character data coinciding with the special-character-added search character data is not present as a result (S13) of the comparison, data obtained by deleting each one character adjacent to the added special character before and behind the special character from the special-character-added search character data are positioned as new search character data (S14). The special-character-added search character generating step is repeated to generate new special-character-added search character data.

The special-character-added search character generating step is repeated until the number of characters of the new search character data is less than two (S15). This is because the repetition is to cope with the following two points. More specifically, the digit number of read character data generated from the read image information is not constant. Furthermore, a figure serving as the center of the generated read character data is not determined in advance.

Thus, when the new search character data is narrowed down to two characters, the central position of the read character data is found. For this reason, in a step using return search character data (will be described later), the accuracy at which a candidate character string is searched is improved. If the number of characters of the new search character data is less than two, second comparing unit 88 determines that searching is impossible. The result is displayed on display unit 73 through impossible searching output unit 89 (S16).

When the coinciding candidate character data is present in the second comparing step, in a front-side return search character generating step, front-side return search character data is generated from the special-character-added search character data by front-side return search character generating unit 90 as shown in FIG. 26B (S21). The front-side return search character data is obtained by returning the front-side one character of the front one and rear one characters adjacent to the special character most recently deleted in the special-character-added search character data.

In the third comparing step, the front-side return search character data and the candidate character data are compared with each other by third comparing unit 91 (S22).

In the third comparing step, when candidate character data coinciding with the front-side return search character data is present (S23), the front-side return search character data is positioned as new special-character-added search character data. The above front-side return search character generating step is repeated to generate new front-side return search character data.

In the third comparing step, when candidate character data coinciding with the front-side return search character data is not present (S23), in a front-side return character deleting step, special-character-added search character data is generated from the front-side return search character data by front-side return character deleting unit 92 (S24). The special-character-added search character data is obtained by deleting a returned front-side one character from the front-side return search character data.

In a rear-side return search character generating step, rear-side return search character data is generated from the special-character-added search character data by rear-side return search character generating unit 93 (S25). The rear-side return search character data is obtained by returning the rear-side one character of the front and rear characters adjacent to the special character most recently deleted in the special-character-added search character data.

In a fourth comparing step, the rear-side return search character data and candidate character data are compared with each other by fourth comparing unit 94 (S26).

In the fourth comparing step, when candidate character data coinciding with the rear-side return search character data is present (S27), the rear-side return search character data is positioned as new special-character-added search character data by candidate character string output unit 86. The rear-side return search character generating step described above is further repeated.

In the fourth comparing step, when candidate character data coinciding with the rear-side return search character data is not present (S27), candidate character string output unit 86 extracts a candidate character string corresponding to the candidate character data (S28 and S29). The candidate character string corresponding to the candidate character data is obtained by deleting the rear-side one character most recently returned from the rear-side return search character data.

The candidate character string extracted as described above is displayed on display unit 73 through candidate character string output unit 86. FIG. 22 shows an example of candidate character string 124.

### About Concrete Example of Secondary Searching

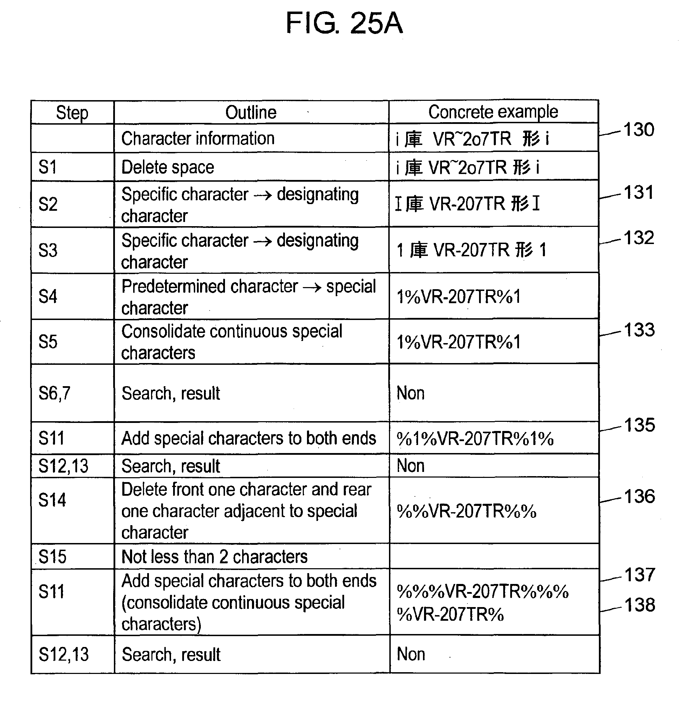

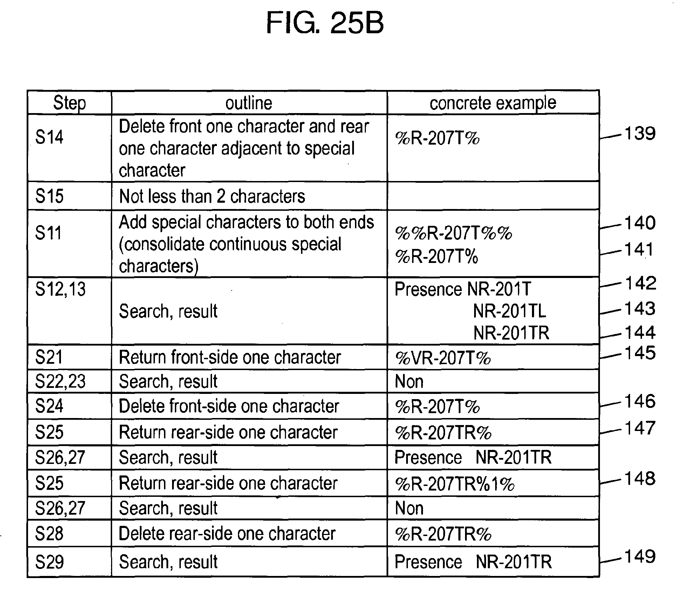

A concrete example of the secondary searching will be further described with reference to FIGS. 25A and 25B. The same reference numerals as in the above description denote the same parts as those in the procedures described in the primary searching, and the same description thereof will be applicable.

In the first comparing step, as a result of the comparison between search character data 133 and the candidate character data, the candidate character data coinciding with search character data 133 is not present.

Thus, in the special-character-added search character generating step, a special character "%" is added to each of both the ends of search character data 133 to generate special-character-added search character data 135.

In the secondary comparing step, as a result of the comparison between special-character-added search character data 135 and the candidate character data, the candidate character data coinciding with special-character-added search character data 135 is not present. Thus, the front-side one and rear-side one characters adjacent to the special character "%", i.e., characters "1" are deleted in the present concrete example. The number of characters included in new search character data 136 generated as described above is not less than two. Thus, the searching is carried on.

Thus, in the special-character-added search character generating step, the special character "%" is again added to each of both the ends of search character data 136 to generate special-character-added search character data 137.

In this case, since the special characters "%" are continued, a continued special character group is replaced with one special character to generate new special-character-added search character data 138.

In the secondary comparing step, as a result of the comparison between special-character-added search character data 138 and the candidate character data, the candidate character data coinciding with special-character-added search character data 138 is not present. Thus, the front-side one and rear-side one characters adjacent to the special character "%", i.e., characters "V" and "R" are deleted in the concrete example. The number of characters included in new search character data 139 generated as described above is not less than two. Thus, the searching is carried on.

Thus, in the special-character-added search character generating step, the special character "%" is again added to each of both the ends of search character data 139 to generate special-character-added search character data 140.

In this case, since the special characters "%" are continued, a continued special character group is replaced with one special character to generate new special-character-added search character data 141.

In the secondary comparing step, as a result of the comparison between special-character-added search character data 141 and the candidate character data, the candidate character data coinciding with special-character-added search character data 141 is present. The coinciding candidate character data includes "NR-201T" (142), "NR-201TL" (143), and "NR-201TR" (144).

In response to the result, in the front-side return search character generating step, the front-side one character "V" of the front-side one and rear-side one characters adjacent to the special character "%" most recently deleted in special-character-added search character data 141 is returned to generate front-side return search character data 145.

In the third comparing step, the front-side return search character data 145 and the candidate character data are compared with each other. As a result of the comparison, the candidate character data coinciding with front-side return search character data 145 is not present. Thus, in the front-side return character deleting step, the returned front-side one character "V" is deleted from front-side return search character data 145 to generate special-character-added search character data 146.

In the rear-side return search character generating step, a rear-side one character "R" of the front-side one and rear-side one characters adjacent to the special character "%" most recently deleted is returned in special-character-added search character data 146 to generate rear-side return search character data 147.

In the fourth comparing step, the rear-side return search character data 147 and the candidate character data are compared with each other.

In the fourth comparing step, since the candidate character data coinciding with the rear-side return search character data 147 is present, the rear-side return search character data 147 is positioned as new special-character-added search character data. The rear-side return search character generating step is further repeated. In this manner, new rear-side return search character data 148 is obtained.

As a result of the comparison in the fourth comparing step, the candidate character data coinciding with rear-side return search character data 148 is not present. Thus, the rear-side one character "1" most recently returned is deleted from rear-side return search character data 148 to extract candidate character string "N-201TR" (149) corresponding to the candidate character data. In this manner, the searching is ended.

As is apparent from the above description, when the character string extraction method and the character string extraction device according to the second embodiment of the present invention are used, the product numbers serving as individual information of refrigerators can be accurately read from a variety of refrigerators that are manufactured by various manufacturers. As a result, processing information strung to the individual information can be easily obtained.

In particular, the characteristics of the character string extraction method and the character string extraction device according to the second embodiment of the present invention exert effect when a read character recognition result includes an erroneously recognized character.

More specifically, when a read character recognition result includes an erroneously recognized character, the character string extraction method and the character string extraction device according to the second embodiment of the present invention do not try to obtain a true product number through various steps to exclude the erroneously recognized character.

The character string extraction method and the character string extraction device according to the second embodiment of the present invention prepare candidate character data 123 including an erroneously recognized character in advance. Candidate character data 123 that is prepared in advance is registered in candidate character data registering unit 81.

Even though a read character recognition result includes an erroneously recognized character, the value reaches candidate character data 123 registered in candidate character data registering unit 81 through the steps described above. When the value reaches registered candidate character data 123, candidate character string 127 strung to candidate character data 123 can be extracted. More specifically, even though a read character recognition result includes an erroneously recognized character, a true product number can be obtained.

In other words, in the character string extraction device according to the second embodiment of the present invention and the extraction method therefor, candidate character data in which a character supposed to be erroneously recognized is replaced for a true product number is prepared in advance. By using a character recognition result read from a target electric appliance, the candidate character data is obtained. In this manner, a true product number is efficiently extracted.

As a result, product information strung to individual information accumulated in advance is rapidly extracted.

The character string extraction method and the character string extraction device support the method for dismantling and the refrigerator dismantling device described in the first embodiment of the present invention, so that refrigerators are subjected to a dismantling process in order of coming to a recycling factory.

As a result, a total floor area to install the dismantling step for refrigerator can be reduced.

The character string extraction device described above can be applied to not only the refrigerator used in the above description but also other commercial products to be recycled or other electric appliances, and the same operational advantages can be obtained as a matter of course.

Furthermore, in the second embodiment of the present invention, characters except for alphameric characters, "()", "+", "-", "/" and "." are defined as predetermined characters based on actual performance of operations executed by the present applicant. However, the predetermined characters may be arbitrarily set regardless of the above setting in accordance with electric appliances targeted by the second embodiment of the present invention or regions in which the second embodiment is executed.

Furthermore, since new electric appliances are brought to the market by turns, when a manufacturer brings a new product to the market, candidate character data 123 related to the new electric appliance may be additionally registered in candidate character data registering unit 81. Alternatively, when a new first product arrives at recycle factory 2, candidate character data 123 related to the new electronic appliance may be additionally registered in candidate character data registering unit 81.

### Third Embodiment

A jig that collects a refrigerant in a third embodiment of the present invention will be described below with reference to the accompanying drawings.

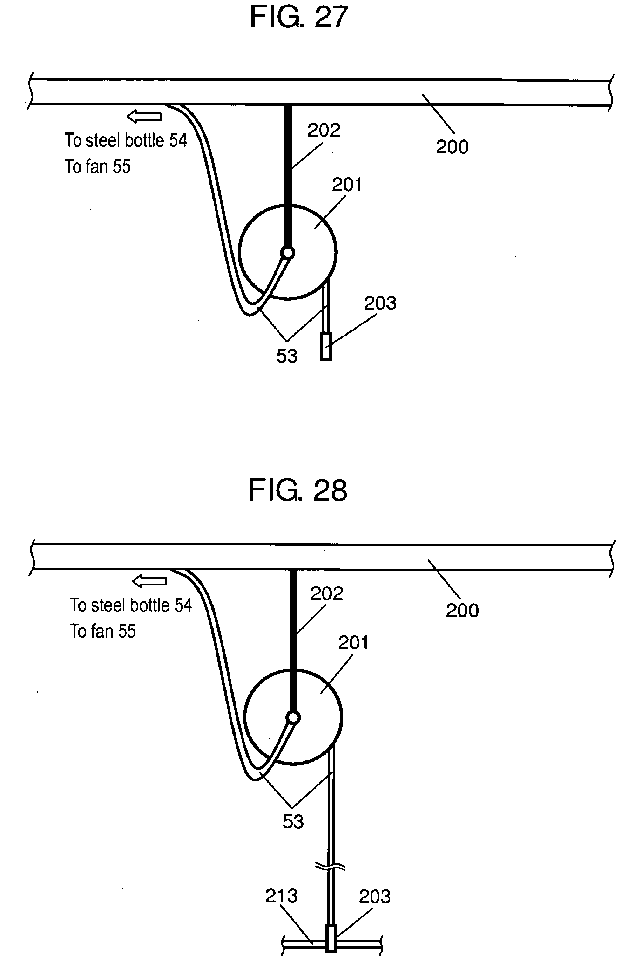

The jig that collects a refrigerant shown in FIGS. 27 to 44 are used in the refrigerant collecting step described in the first embodiment of the present invention. About an outline of the refrigerant collecting step, the contents described with reference to FIGS. 8 and 9 are applicable.

In the refrigerant collecting step, refrigerators using refrigerant of the same type may be continuously processed. Depending on the types of refrigerant, time is specially required to collect some refrigerant from a refrigerator. More specifically, refrigerators using R502, R22, and the like as refrigerant have long pipes arranged therein. Thus, a pipe resistance of the pipe arrangement becomes very high. In this manner, when refrigerators using refrigerant that require long time to perform a refrigerant collecting operation are continuously processed, refrigerant may not be collected from subsequent refrigerators within predetermined time. In this case, the conveyor is stopped until the refrigerant are collected from the refrigerators. In order to avoid the circumstances, the jig that collects refrigerant is required to have a range of operation as wide as possible.

However, in order to widen the range of operation, when the jig that collects a refrigerant, especially, hose 53 configuring a communication path increases in length, a new problem is posed. More specifically, when refrigerators using refrigerant of the same type do not continuously flow in, long hose 53 hinders the operation.

In order to solve the conflicting problems, the jig that collects a refrigerant includes a collecting container that collects a refrigerant from a refrigerator, a communication path that communicates the refrigerator with the collecting container, and an adjusting unit that adjusts a range of operation of the communication path.

Alternatively, the jig that collects a refrigerant according to the third embodiment of the present invention includes a stirring unit that dilutes and releases a refrigerant collected from a refrigerator to the atmosphere, a communication path that communicates the refrigerator and the stirring unit with each other, and an adjusting unit that adjusts a range of operation of the communication path.

An example of the jig will be described with reference to FIGS. 27 to 30.

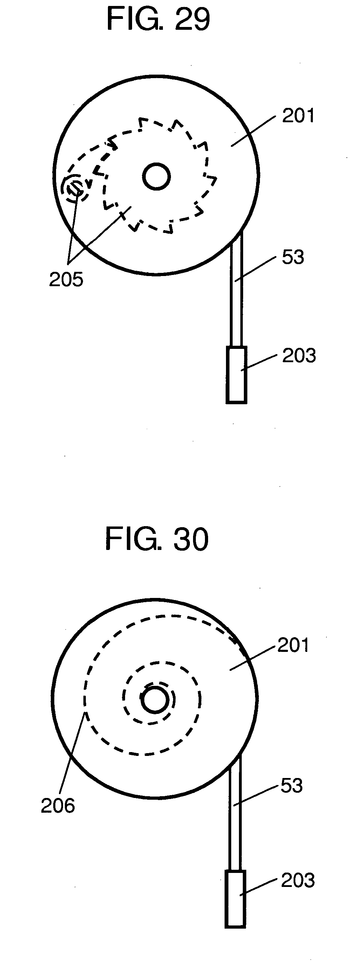

In the drawings, frame 200 is a part of a frame formed in a space above a conveyor in the refrigerant collecting step. Reel 201 serving as an adjusting unit (will be described later) is arranged on frame 200. Frame 200 is produced by a metal rail or pipe or the like. Reel 201 serving as an adjusting unit is held to be vertically suspended from frame 200 through suspending tool 202. Suspending tool 202 is produced by a rope, a chain, a metal pipe, or the like for suspension. Hose 53 serving as a communication path is wound around reel 201. In reel 201, ratchet mechanism 205 shown in FIG. 29 is arranged. Power spring 206 shown in FIG. 30 is arranged on reel 201. When ratchet mechanism 205 is used, hose 53 is drawn by a length needed for an operation. Upon completion of a refrigerant collecting operation, when ratchet mechanism 205 is released, hose 53 is rewound by a predetermined length. On the other hand, when a member such as power spring 206 having elastic force is arranged, the drawn hose 53 is rewound to reel 201 by the elastic force held by power spring 206. In this manner, hose 53 can be freely taken in or out.

Punching tool 203 is attached to one end of hose 53. Steel bottle 54 serving as a collecting container is attached to the other end of hose 53. Alternatively, fan 55 serving as a stirring unit is attached to the other end of hose 53. These components are selectively used depending on the types of refrigerant collected from refrigerators. Chlorofluorocarbon is a refrigerant that needs to be collected. When the jig that collects a refrigerant is used to collect chlorofluorocarbon, steel bottle 54 is attached to hose 53. The combustible refrigerant is a refrigerant that is diluted and released to the atmosphere. When a jig that collects another refrigerant is used in collection of a combustible refrigerant, fan 55 is attached to hose 53. Punching tool 203 forms a hole in pipe 213 configuring a refrigerating cycle included in a refrigerator. Punching tool 203 is attached to the hole.

A state in which the jig that collects a refrigerant is standby is shown in FIG. 27. At this time, hose 53 is wound around reel 201.

A state in which a refrigerant is collected from a refrigerator by using the jig that collects a refrigerant is shown in FIG. 28. At this time, hose 53 is drawn from reel 201. Punching tool 203 arranged at the distal end of hose 53 is attached to pipe 213 of the refrigerator. The refrigerant in the refrigerator is collected from the refrigerator into the steel bottle through punching tool 203 and hose 53. Alternatively, similarly, the refrigerant in the refrigerator is collected from the refrigerator to the fan. When the refrigerant is collected from the refrigerator, punching tool 203 is removed from pipe 213. Thereafter, the jig that collects a refrigerant returns to the standby state shown in FIG. 27.

As is apparent from the above description, by using the jig that collects a refrigerant according to the third embodiment of the present invention, depending on operation states in which refrigerant are collected from refrigerators, the length of hose 53 is adjusted. More specifically, in the standby state, the length of hose 53 for collecting a refrigerant is reduced such that hose 53 is drawn. In collection of a refrigerant, the length of hose 53 is increased such that an operation required to collect a refrigerant can be performed.

As a result, even though refrigerators each using a refrigerant that requires long time for a refrigerant collecting operation are continuously flown on the conveyor, the length of hose 53 required for an operation of collecting a refrigerant is secured. Thus, the refrigerant collecting operation is continuously performed without intermitting the conveyor.

When a refrigerant collecting operation is not performed, hose 53 is rewound to prevent excessively long hose 53 from leaving near the conveyor. Thus, since a defectiveness such as tangling of hose 53 can be eliminated, operating efficiency can be prevented from being deteriorated.

Another concrete example will be described below with reference to the accompanying drawings.

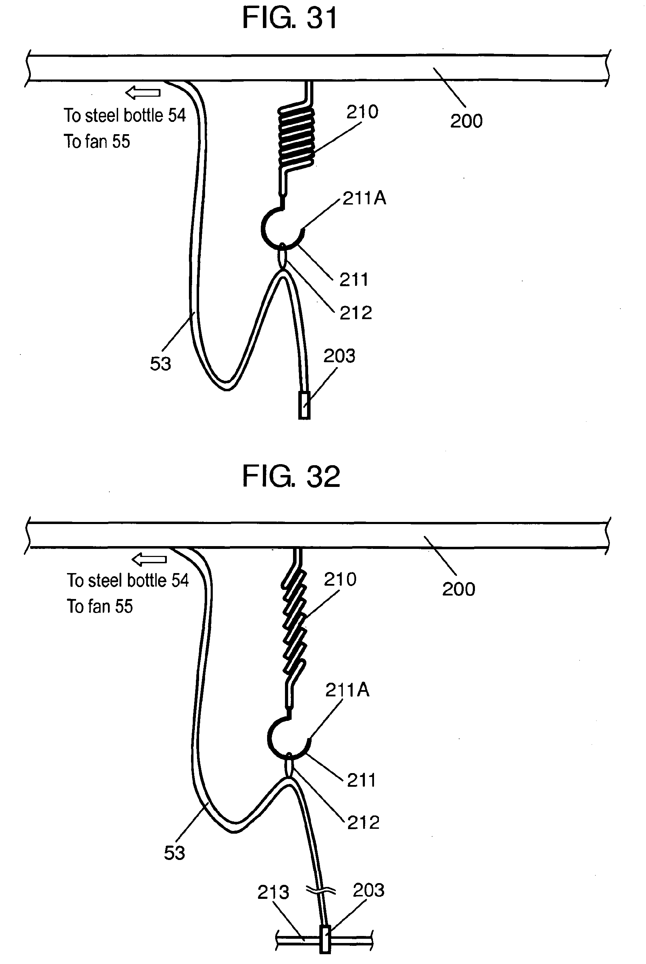

In FIGS. 31 and 32, as an adjusting unit, coil spring 210 serving as an elastic member is used for a suspending tool. Coil spring 210 has one end attached to frame 200. Hook 211 serving as a hanging unit is attached to the other end. Ring 212 hooked on hook 211 is attached at a predetermined position of hose 53. Punching tool 203 is arranged at one end of hose 53.

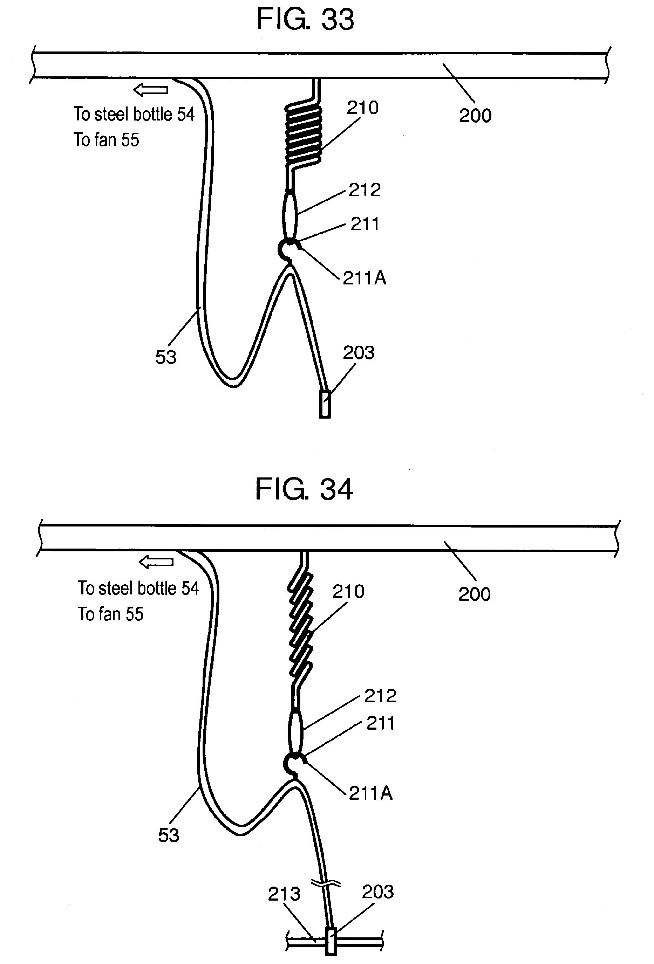

FIGS. 33 and 34 are obtained by replacing hook 211 and ring 212 in the example shown in FIGS. 31 and 32.

As hook 211 and ring 212, when hose 53 serving as a communication path can be hooked on the suspending tool serving as an elastic member, other members may be used.

FIGS. 31 and 33 show a state in which the jig that collects a refrigerant is standby. FIGS. 32 and 34 show a state where the jig that collects a refrigerant is collecting a refrigerant from a refrigerator.

When coil spring 210 extends in a case where the concrete example shown in FIGS. 31 to 34 is used, hose 53 serving as a communication path can be used by a length prepared in advance. The maximum range of length of hose 53 is a range of operation of the jig that collects a refrigerant.

Upon completion of the refrigerant collecting operation from the refrigerator, hose 53 is shortened to a predetermined length due to the elastic force of coil spring 210.

In a concrete example shown in FIGS. 31 and 32, hanging unit end portion (hook releasing unit) 211A of the hook is vertically upwardly released. Thus, in order to remove ring 212 from hook 211, ring 212 needs to cross over hanging unit end portion 211A. According to the configuration, ring 212 is not easily removed from hook 211.

On the other hand, in a concrete example shown in FIGS. 33 and 34, hanging unit end portion (hook releasing unit) 211A of the hook is vertically downwardly released. Thus, when hook 211 is arranged at a high position, an operation of hanging hook 211 on ring 212 is easy.

As is apparent from the above description, by using the jig that collects a refrigerant according to the third embodiment of the present invention, depending on operation states in which refrigerant are collected from refrigerators, the length of hose 53 is adjusted.

As shown in FIGS. 31 to 34, when a member having elastic force is used as a suspending tool, a jig that collects a refrigerant is used in a state in which hose 53 serving as a communication path is hanged on coil spring 210 serving as a suspending tool.

According to the configuration, when the refrigerant collecting operation is ended, the jig that collects a refrigerant can be quickly returned to the standby state by the elastic force of the suspending tool.

As a result, even though refrigerators each using a refrigerant that requires long time for a refrigerant collecting operation are continuously flown on the conveyor, the length of hose 53 required for the refrigerant collecting operation is secured. Thus, the refrigerant collecting operation is continuously performed without intermitting the conveyor.

When a refrigerant collecting operation is not performed, hose 53 is shortened to a predetermined length. Excessively long hose 53 is prevented from being left near the conveyor. As a result, since hose 53 is not tangled, operating efficiency can be prevented from being deteriorated.

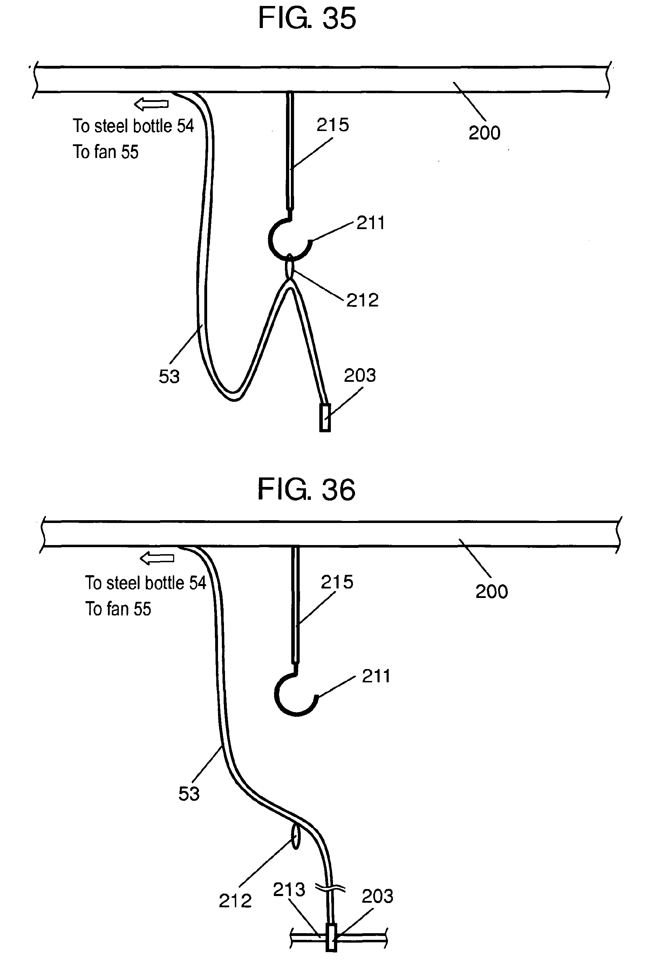

As another concrete example, as shown in FIGS. 35 to 36, a member that does not have elastic force may be used as suspending tool 215. Suspending tool 215 is produced by a rope, a chain, a metal pipe, or the like for suspension. At this time, hook 211 serving as a hanging unit arranged at one end of suspending tool 215 and ring 212 serving a hanged unit arranged on hose 53 serving as a communication path configure an adjusting unit.

When a refrigerant collecting operation is performed by using the concrete example, hose 53 is removed from hook 211 and then used. In this manner, hose 53 is attached or detached to adjust the length of hose 53. Thus, a range of operation of the jig that collects a refrigerant is adjusted.

Upon completion of the refrigerant collecting operation from the refrigerator, ring 212 is hanged on hook 211 to shorten hose 53 to predetermined length.

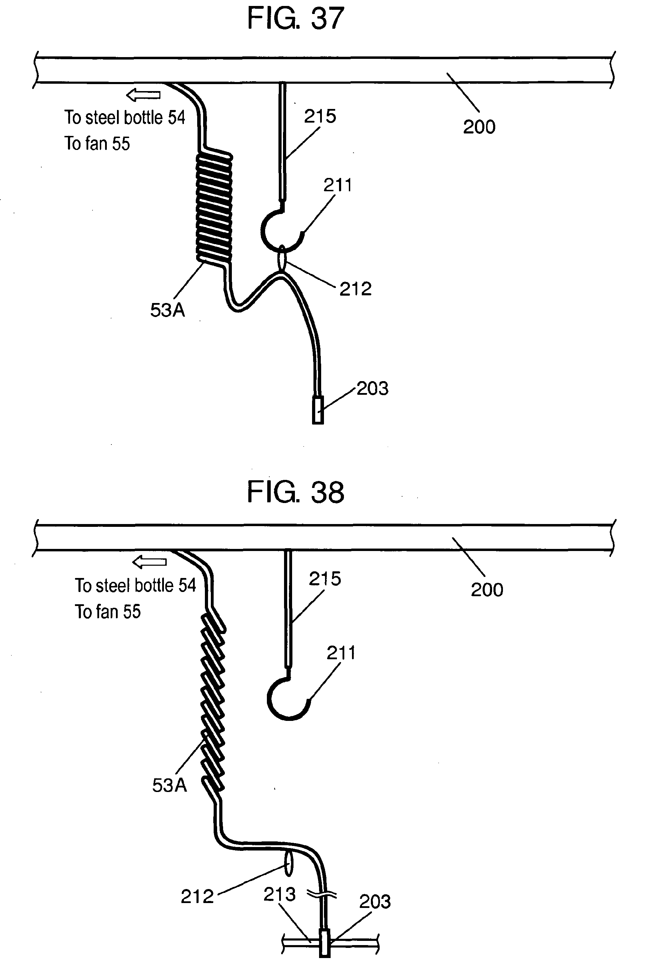

As another concrete example, as shown in FIGS. 37 to 38, coil hose 53A is used as a hose. In comparison with the concrete example shown in FIGS. 35 and 36, when the lengths of hose 53 and coil hose 53A in a standby state are equal to each other, coil hose 53A has a length extending than that of hose 53. Thus, in the refrigerant collection, a range operation of the jig that collects a refrigerant in the concrete example is wider than that in the previously described concrete example.

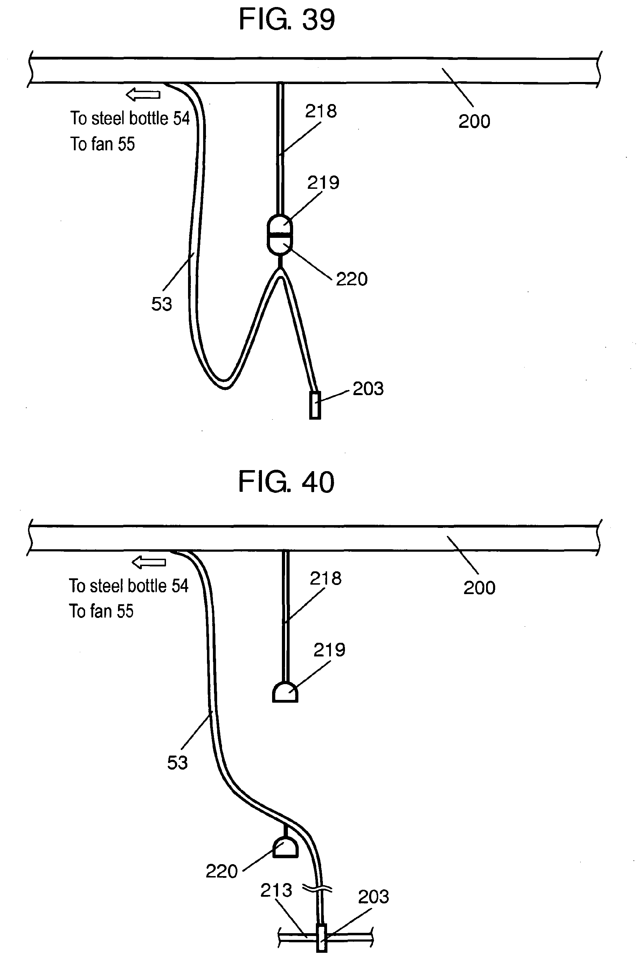

Furthermore, in another concrete example shown in FIGS. 39 and 40, when hose 53 is hanged on suspending tool 218, hanging units 219 and 220 that attract to each other by magnet force are used as adjusting units. Hanging units 219 and 220 that attract to each other by magnet fore are used in place of hook 211 and ring 212.

Magnetic force of hanging units 219 and 220 can hold hose 53, and hanging units 219 and 220 are adjusted with proper force to have some distance therebetween in a refrigerant collecting operation.

When a refrigerant collecting operation is performed by using the concrete example, hose 53 is removed from hanging unit 219 together with hanging unit 220 and then used. The length of hose 53 at this time corresponds to a range of operation of the jig that collects a refrigerant.

Upon completion of the refrigerant collecting operation from the refrigerator, hose 53 is shortened to a predetermined length by attaching hanging unit 220 to hanging unit 219.

As is apparent from the above description, by using the jig that collects a refrigerant according to the third embodiment of the present invention, depending on operation states in which refrigerant are collected from refrigerators, the length of hose 53 is adjusted. As a means of adjusting the length of hose 53, hook 211 or ring 212, hanging units 219 and 220 having magnetic force, or coil hose 53A are used. When the components are used, with a simple configuration, in a standby state, hose 53 for collecting a refrigerant is shortened to make it possible to draw hose 53. In the refrigerant collection, hose 53 is elongated to make it possible to perform a necessary refrigerant collecting operation. The concrete examples may be arbitrarily combined to each other.

As a result, even though refrigerators each using a refrigerant that requires long time for a refrigerant collecting operation are continuously flown on the conveyor, the length of hose 53 required for the refrigerant collecting operation is secured. Thus, the refrigerant collecting operation is continuously performed without intermitting the conveyor.

When a refrigerant is not collected, hose 53 is shortened by a predetermined length to prevent excessively long hose 53 from being left near the conveyor. Thus, since hose 53 is not tangled, operating efficiency can be prevented from being deteriorated.

In case that refrigerators using refrigerant of the same type are continuously processed, how to deal with this case will be described below.

As described above, when refrigerators using refrigerant that require long time to perform a refrigerant collecting operation are continuously processed, the conveyor may be stopped. As a countermeasure against the drawback, the above concrete examples are proposed. In the concrete example described above, a range of operation of the jig that collects a refrigerant is mainly adjusted by the length of hose 53 serving a communication path. As a result, in order to obtain a wider range of operation, the following problem is posed when long hose 53 is used. Upon completion of the refrigerant collecting operation, when the state is returned to the initial state (standby state), long drawn hose 53 may be tangled. Alternatively, when the state is returned to the initial state (standby state), drawn hose 53 may twist. The longer hose 53 becomes, the higher the possibility of occurrence of the twisting or tangling becomes. Thus, hose 53 needs to be carefully handled. As a result, operating efficiency may be deteriorated.

Thus, still another concrete example of the third embodiment of the present invention has a guide unit as an adjusting unit.

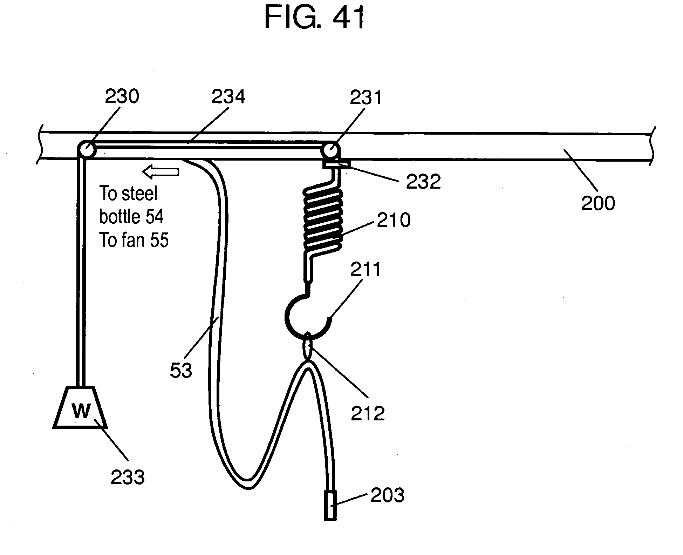

The example will be described with reference to FIGS. 41 to 44.

In the drawings, the guide unit includes pulleys 230 and 231, positioning units 232, weight 233, and rope 234 serving as an interlocking unit that connects coil spring 210 serving as a suspending tool and weight 233.

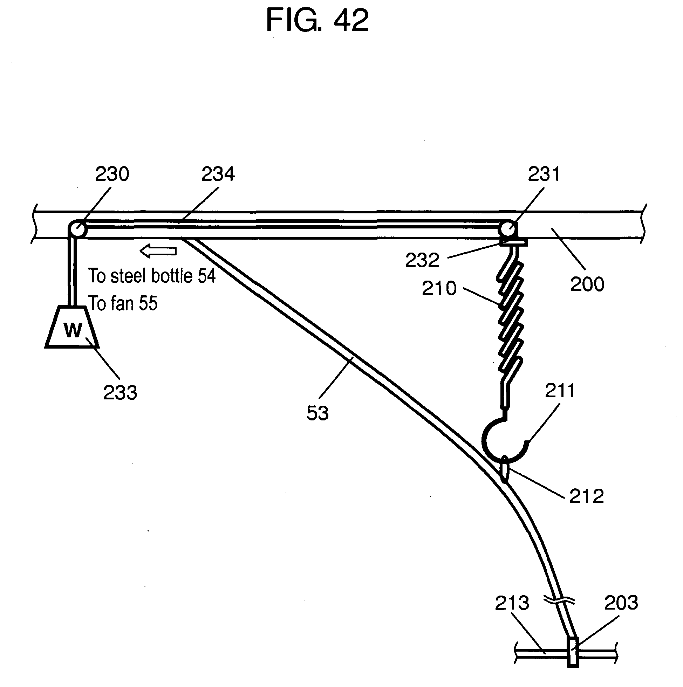

As shown in FIGS. 41 and 42, pulley 230 is fixed in frame 200. Pulley 231 moves on a rail arranged in frame 200.

When a refrigerant is collected from a refrigerator, punching tool 203 is attached to pipe 213 arranged on the refrigerator. In accordance with movement of the refrigerator on the conveyor, pulley 231 moves to the right in frame 200 in the drawing (the conveyor moves to the right in the drawing). With the movement of pulley 231, hose 53 is drawn from frame 200. Thereafter, upon completion of the refrigerant collecting operation from a refrigerator, punching tool 203 is removed from pipe 213. At this time, weight 233 that is made properly heavier than punching tool 203 vertically falls down by its own weight. Since weight 233 falls down, pulley 231 moves in a direction in which pulley 230 is arranged. With the movement of pulley 231, coil spring 210 and hose 53 return to a standby position shown in FIG. 41.

When the guide unit described above is used, even though long hose 53 is used, hose 53 can be smoothly taken in or out. In particular, when a ratchet mechanism included in reel 201 described above or a mechanism such as a power spring is used on the side of steel bottle 54 or fan 55 of hose 53, hose 53 is smoothly rewound on the mechanism when pulley 231 moves toward pulley 230.

As shown in FIG. 41, when positioning units 232 is arranged near an end portion of coil spring 210 on the side of frame 200, coil spring 210 can be prevented from being drawn into frame 200 by a function of rope 234.

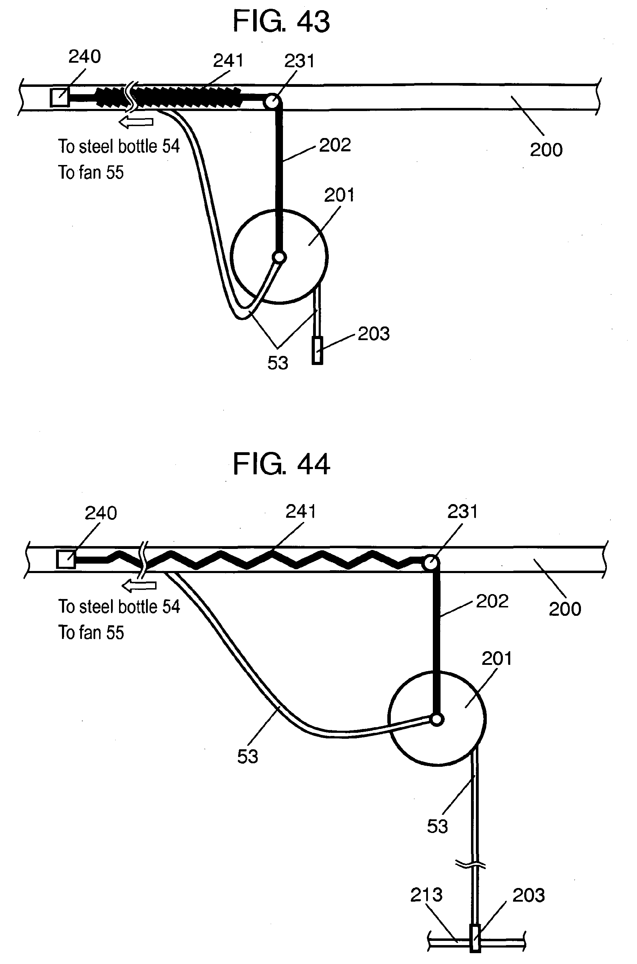

Another concrete example will be described below with reference to FIGS. 43 and 44.

The adjusting unit further includes a guide unit. In accordance with movement of a refrigerator on the conveyor, the guide unit moves suspending tool 202 serving as a main part of the adjusting unit along the conveyor.

In the drawing, the guide unit has coil spring 241 serving as an elastic member. Coil spring 241 functions as fixing unit 240, pulley 231, and an interlocking unit that connects a suspending rope serving as suspending tool 202 to fixing unit 240.

As suspending tool 202, a chain, a metal pipe, or the like can also be used. The interlocking unit needs only to have elastic force. For example, a rubber belt or the like can be used as another member.

As shown in FIGS. 43 and 44, fixing unit 240 is fixed in frame 200. Pulley 231 moves on a rail arranged in frame 200. One end of coil spring 241 is connected to fixing unit 240. The other end of coil spring 241 is connected to the rope through pulley 231. Reel 201 is connected to one end of the rope serving as suspending tool 202.

When a refrigerant is collected from a refrigerator, punching tool 203 is attached to pipe 213 arranged on the refrigerator. In accordance with movement of the refrigerator on the conveyor, pulley 231 moves to the right in frame 200 in the drawing (the conveyor moves to the right in the drawing). With the movement of pulley 231, coil spring 241 is extended. In accordance with this, hose 53 is drawn from frame 200. In addition, as needed, hose 53 is drawn from reel 201.

Thereafter, upon completion of the refrigerant collecting operation from a refrigerator, punching tool 203 is removed from pipe 213. At this time, hose 53 is rewound on reel 201 by the function of a rewinding mechanism such as a ratchet mechanism included in reel 201. Furthermore, by the elastic force of coil spring 241, pulley 231 moves toward fixing unit 240. In this manner, the jig that collects a refrigerant returns to the standby state shown in FIG. 43.

When the adjusting unit having the guide unit is used, even though long hose 53 is used, hose 53 can be smoothly taken in or out. Furthermore, since the rope serving as suspending tool 202 is moved with the movement of the refrigerator on the conveyor, hose 53 having a proper length is used.

As a result, even though refrigerators each using a refrigerant that requires long time for a refrigerant collecting operation are continuously processed, hose 53 is sufficiently drawn out. In addition, upon completion of the refrigerant collecting operation, by the function of the adjusting unit including the guide unit, the jig that collects a refrigerant is quickly returned to a standby state that is an initial position.

In this embodiment, a positioning unit is not used. However, in order to prevent the rope serving as suspending tool 202 from being drawn into frame 200 by the function of coil spring 241, a positioning unit may be provided.

As is apparent from the above description, by using the jig that collects a refrigerant according to the third embodiment of the present invention, depending on operation states in which refrigerant are collected from refrigerators, the length of hose 53 is adjusted. More specifically, mainly, a guide unit using pulley 231 moving in frame 200 is used.

With the configuration, even though refrigerators each using a refrigerant that requires long time for a refrigerant collecting operation are continuously flown on the conveyor, by the operation of pulley 231, coil spring 210 serving as a suspending tool and the rope serving as suspending tool 202 are moved with the movement of the refrigerators. Thus, punching tool 203 attached to the distal end of hose 53 can move in a wide range while being supported by coil spring 210 serving as the suspending tool or the rope serving as the suspending tool 202. In addition, upon completion of the refrigerant collecting operation, by own weight of weight 233 and the elastic force of coil spring 241, pulley 231 is moved to a pulley 230 or fixing unit 240 side. Thus, since drawn out hose 53 can be smoothly collected, the jig that collects a refrigerant can be returned to the standby state that is the initial state.

In this manner, since hose 53 can be easily taken in or out, even though long hose 53 is used, hose 53 is handled without giving attention to twisting or tangling. Thus, the operating efficiency can be prevented from being deteriorated.

### Fourth Embodiment

A method for dismantling household electrical appliances and a household electrical appliance dismantling device according to a fourth embodiment of the present invention will be described below with reference to the accompanying drawings. The fourth embodiment will be described below by using a washing machine as a household electrical appliance.

The same reference numerals denote the same constituent elements described in the background art and the embodiments described above, and the same description is applicable.

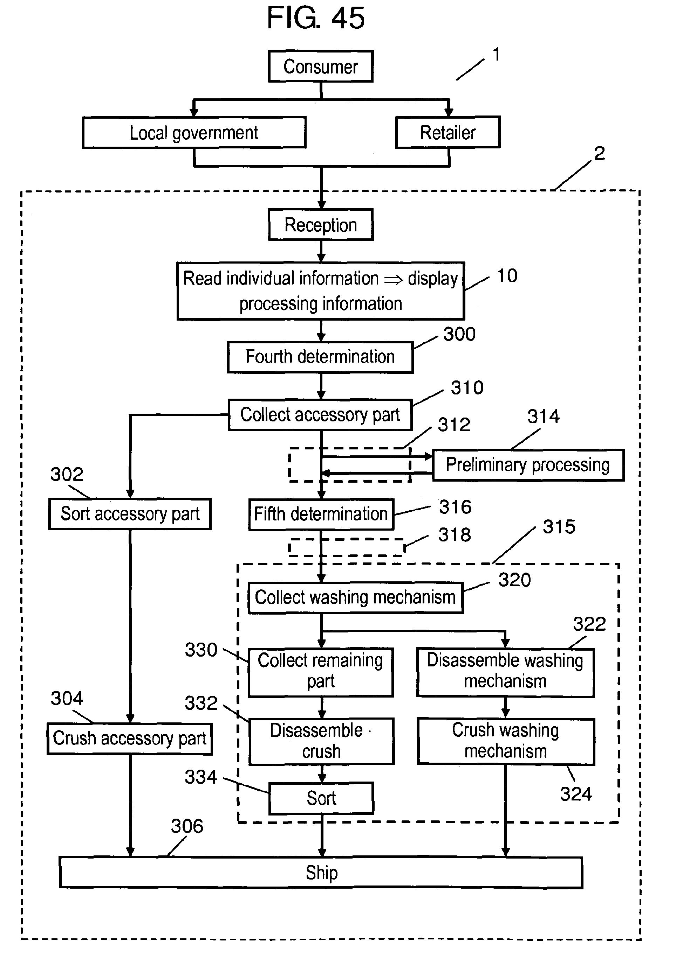

As shown in FIG. 45, a washing machine serving as a household electrical appliance is collected from market 1 into recycle factory 2. The collected washing machine passes through step 10 to obtain processing information from individual information. The processing information is information to identify a processing step to be selected when processing steps are selected depending on applied materials or structures of washing machines in dismantling of washing machines.

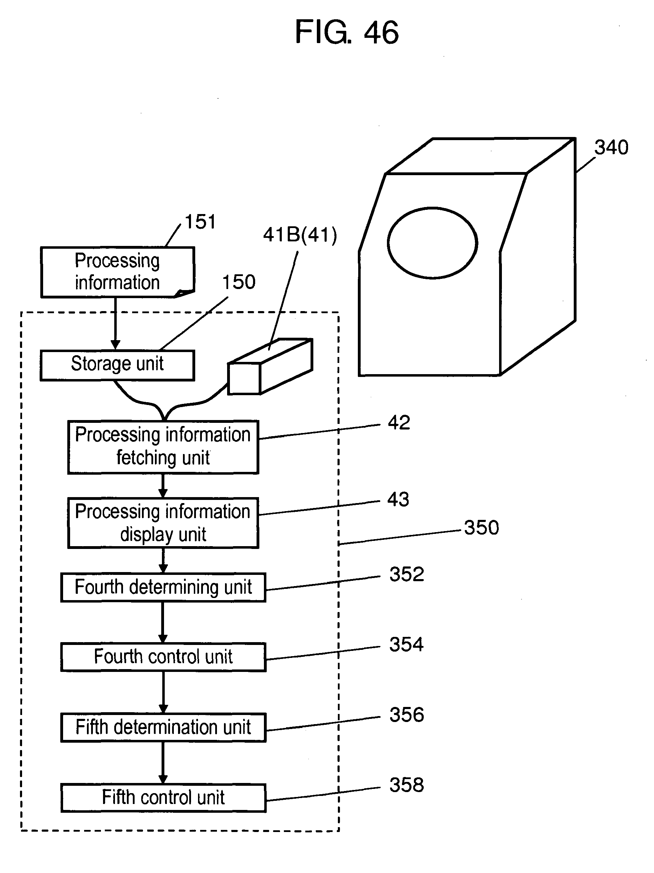

As shown in FIGS. 2 and 46, in storage unit 150, processing information 151 that is associated with individual information of washing machine 340 to dismantle washing machine 340 is stored in advance (storing step 152). Storage unit 150 is included in washing machine dismantling device 350. In individual information reading step 30, individual information from washing machine 340 is read by individual information reading unit 41. In processing information fetching step 31, processing information to dismantle washing machine 340 is fetched from the read individual information by processing information fetching unit 42. As shown in FIGS. 2 and 46, in processing information display step 32, the fetched processing information is displayed on washing machine 340 by processing information display unit 43 using a processing information display part. When washing machine 340 is moved while being placed on a palette or the like, the processing information may be displayed on the palette. Alternatively, the processing information may be directly printed on washing machine 340.

As shown in FIG. 45, in fourth determination step 300, fourth determination unit 352 determines one of preliminary processing step 314 and dismantling step 315 to which washing machine 340 should be shifted based on the displayed processing information.

Washing machine 340 determined by fourth determination step 300 is shifted to accessory part collecting step 310 in which accessory parts are collected regardless of the determination result. The collected accessory parts are subjected to accessory part selection 302 and accessory part crushing 304 in units of materials, and are subjected to shipping 306 as recyclable resources.

According to the determination result obtained by fourth determination step 300, fourth control unit 354 shifts washing machine 340 to preliminary processing step 314 or dismantling step 315 (step 312).

Note that "washing machine 340 is directly shifted to dismantling step 315" means that washing machine 340 is shifted to dismantling step 315 without passing through preliminary processing step 314. Unless washing machine 340 passes through preliminary processing step 314, washing machine 340 may be shifted to dismantling step 315 through another step on its way.

Washing machine 340 determined to be shifted to preliminary processing step 314 as a result of the determination made by fourth determination step 300 is shifted by fourth control unit 352 to preliminary processing step 314 in which preliminary processing is performed based on the processing information.

The preliminary processing is described here. In the fourth embodiment of the present invention, a machine type positioned as a target of preliminary processing represents a machine type in which a heat pump is incorporated.

In the machine type in which a heat pump is incorporated, a refrigerant is collected from a refrigerating cycle. A heat exchanger and a compressor configuring a refrigerating cycle are removed from washing machine 340.

The removed heat exchanger and compressor are subjected to proper processing and shipping 306 as recyclable resources.

After the preliminary processing as described above is performed, washing machine 340 is shifted to dismantling step 315 through fifth determination step 316.

In fifth determination step 316, disassembling steps 322 and 332 to which washing machine 340 is subjected in dismantling step 315 are determined. Fifth determination step 316, based on processing information 151, determines one of disassembling steps 322 and 332 employed among predetermined disassembling steps.

Washing machines 340 are classified by the number of washing tubs included therein. Furthermore, washing machines 340 are classified by differences between mechanisms such as a vertical type and a drum type that rotate washing tubs. Depending on the classifications, disassembling steps 322 and 332 of washing machine 340 are determined in advance.

In fifth determination step 316, fifth determination unit 356, based on the displayed processing information, determines disassembling steps 322 and 332 of washing machine 340. According to the determination result, washing machine 340 is shifted to disassembling steps 322 and 332 by fifth control unit 358 (step 318). From washing machine 340, by a predetermined method, a washing tub and a washing mechanism having a motor for driving the washing tub are collected (washing mechanism collecting step 320).

The collected washing mechanism is disassembled into the washing tub and the motor (washing mechanism disassembling step 322). The washing machines and the motor are crushed (washing mechanism breaking step 324), sorted in units of materials, and subjected to shipping 306 as recyclable resources.

On the other hand, from washing machine 340 from which the washing mechanism is removed, parts remaining in a washing machines body are collected (remaining part collecting step 330). A part configuring the housing of the washing machines is crushed (disassembling/crushing step 332). The crushed washing machines are sorted into different materials by a wind power sorter or a magnetic sorter that is conventionally used in sorting step 334, and is subjected to shipping 306 as recyclable resources.

As is apparent from the above description, when the method for dismantling household electrical appliances and the household electrical appliance dismantling device according to the fourth embodiment of the present invention are used, electric appliances are sequentially subjected to the dismantling process in order of coming to a recycling factory. Thus, a space that is required in a conventional lot process and that stores pending electric appliances therein is not required. In other words, a total floor area in which dismantling facilities for electric appliance decreases.

Since processing freshness of electric appliances is improved, a dismantling rate of electric appliances increases in a recycling factory. A switching loss generated when lot processes are switched is prevented from being generated. A moving loss that has been generated to move an electric appliance to be processed from a storage place to the processing step is prevented from being generated. More specifically, a dismantling processing ability of electric appliances in a recycling factory is improved.

More specifically, by using a method for dismantling household electrical appliances and a household electrical appliance dismantling device according to the fourth embodiment of the present invention, improvements of a spatial element and a time element are provided.

The fourth embodiment describes the dismantling process for washing machine. The fourth embodiment, as described in the first embodiment described above, can also be applied to other electric appliances, for example, television receivers, air conditioning apparatuses, and the like. In this case, items and references determined by the fourth determination unit and the fifth determination unit employed in the fourth embodiment are arbitrarily set depending on target electric appliances.

### INDUSTRIAL APPLICABILITY

According to the character string extraction method and the character string extraction device of the present invention, candidate character data supposed when the data includes characters obtained by erroneously recognizing a true product number is prepared in advance. Thus, even though a read character recognition result includes an erroneously recognized character, when the candidate character data can be obtained, a true product number is extracted. As a result, even in an electronic appliance except for a refrigerator, a true product number of an electric appliance to be operated can be efficiently extracted.

### REFERENCE MARKS IN THE DRAWINGS

- 11: first determination step
- 12, 314: preliminary processing step
- 18: second determination step
- 19: refrigerant collecting step
- 20: refrigerant collecting step
- 23: third determination step
- 24: standby step
- 25: crushing step
- 30: individual information reading step
- 31: processing information fetching step
- 32: processing information display step
- 40: refrigerator
- 40A: refrigerator
- 40B: refrigerator
- 41: individual information reading unit
- 41A: camera
- 41B: scanner
- 42: processing information fetching unit
- 43: processing information display unit
- 44: type of refrigerant
- 45: barcode (type of thermal insulating material)
- 46, 46A: processing information display part
- 47: type of refrigerant
- 48: QR code (type of thermal insulating material)
- 50: IC chip (processing information display part)
- 53: hose (jig, communication path)
- 53A: coil hose (adjusting unit)
- 54: steel bottle (jig, collecting container)
- 55: fan (jig, stirring unit)
- 56: first determination unit
- 57: second determination unit
- 58: compressor
- 59: third determination unit
- 70: image input unit (scanner)
- 71: arithmetic operation unit
- 72: registering unit
- 73: display unit
- 74: input unit (mouse, keyboard)
- 75: output unit (printer)
- 80: replacement information registering unit
- 81: candidate character data registering unit
- 82: image information converting unit
- 83: character information replacing unit
- 84: search character generating unit
- 85: first comparing unit
- 86: candidate character string output unit
- 87: special-character-added search character generating unit
- 88: second comparing unit
- 89: impossible searching output unit
- 90: front-side return search character generating unit
- 91: third comparing unit
- 92: front-side return character deleting unit
- 93: rear-side return search character generating unit
- 94: fourth comparing unit
- 120: specific character
- 121: specific character
- 122: specific character
- 123: candidate character data
- 124: candidate character string
- 125: product number
- 126: designated character
- 127: candidate character string
- 130: character information
- 131: character information
- 132: read character data
- 133: search character data
- 134: candidate character string
- 135: special-character-added search character data
- 136: search character data
- 137: special-character-added search character data
- 138: special-character-added search character data
- 139: search character data
- 140: special-character-added search character data
- 141: special-character-added search character data
- 142: candidate character data
- 143: candidate character data
- 144: candidate character data
- 145: front-side return search character data
- 146: special-character-added search character data
- 147: rear-side return search character data
- 148: rear-side return search character data
- 149: candidate character string
- 150: storage unit
- 151: processing information
- 152: storing step
- 153: first control unit
- 154: second control unit
- 155: third control unit
- 156, 157, 158, 312, 318: step
- 159: refrigerator dismantling device
- 201: reel (adjusting unit)
- 202: suspending tool (guide unit)
- 210: coil spring (adjusting unit)
- 211: hook (adjusting unit)
- 212: ring (adjusting unit)
- 215: suspending tool
- 218: suspending tool
- 219: hanging unit (adjusting unit)
- 220: hanging unit (adjusting unit)
- 230: pulley (guide unit)
- 231: pulley (guide unit)
- 232: positioning unit (guide unit)
- 233: weight (guide unit)
- 234: rope (guide unit)
- 240: fixing unit (guide unit)
- 241: coil spring (guide unit)
- 300: fourth determination unit
- 315: dismantling step
- 316: fifth determination step
- 322: washing machine disassembling step (disassembling step)
- 332: disassembling • crushing step (disassembling step)
- 340: washing machine
- 350: washing machine dismantling device (household electrical appliance dismantling device)
- 352: fourth determination unit
- 354: fourth control unit
- 356: fifth determination unit
- 358: fifth control unit

## Claims

1. A character string extraction method that extracts a pre-registered candidate character string (127) from image information obtained by reading individual information, the character string extraction method comprising:
a replacement information registering step of pre-registering replacement information (80A) to replace a specific character (120,121,122) with a designated character (126) with respect to character information (130) expected to be erroneously recognized;
a candidate character data registering step of pre-registering candidate character data (123) supposed when the designated character (126) is used with respect to the candidate character string (127);
an image information converting step of converting read image information into character information (130);
a character information replacing step (S2,S3) of replacing the specific character (120,121,122) with the designated character (126) when the character information (130) includes the specific character (120,121,122) and generating read character data (132) by using converted character information;
a search character generating step (S4, S5) of replacing a predetermined character of the read character data (132) with a special character, further replacing a continued special character group with one special character when the special characters are continued, and generating search character data (133) from the read character data (132), wherein the special character is defined as a wild card;
a first comparing step (S6) of comparing the search character data (133) with the candidate character data (123); and
a candidate character string output step (S7) of extracting a candidate character string (127) corresponding to the candidate character data (123) when the candidate character data (123) coinciding with the search character data (133) is present as a result of a comparison between the search character data (133) and the candidate character data (123) in the first comparing step (S7)wherein
when the candidate character data (123) coinciding with the search character data (133) is not present as a result of the comparison between the search character data (133) and the candidate character data (123) in the first comparing step (S6), the method further comprises
a special-character-added search character generating step (S11) of adding special characters to front and rear ends of the search character data (133) to generate special-character-added search character data (135), and further replacing a continued special character group with one special character when the special characters are continued, and
a second comparing step (S12) of comparing the special-character-added search character data (135) with the candidate character data (123),
wherein when the candidate character data (123) coinciding with the special-character-added search character data (135) is not present as a result of a comparison between the special-character-added search character data (135) and the candidate character data (123) in the second comparing step (S12), each one of characters adjacent to the added special character before and behind the special character are deleted from the special-character-added search character data (135) to obtain new search character data (136) and the special-character-added search character generating step (S11) and the second comparing step (S12) are repeated.

2. The character string extraction method according to claim 1, further comprising a step (S16) of, when the new search character data (139) includes less than two characters as a result of deleting the each one of characters adjacent to the added special character before and behind the special character from the special-character-added search character data (138), causing searching to be impossible.

3. The character string extraction method according to claim 1 or 2, wherein
when the candidate character data (123) coinciding with the special-character-added search character data (141) is present as a result of the comparison between the special-character-added search character data (141) and the candidate character data (123) in the second comparing step (S12), the method further comprises
a front-side return search character generating step (S21) of returning a front-side one character of the front one and rear one characters adjacent to the special character most recently deleted in the special-character-added search character data (141) to generate front-side return search character data (145); and
a third comparing step (S22) of comparing the front-side return search character data (145) with the candidate character data (123), wherein
when the candidate character data coinciding with the front-side return search character data is present as a result of a comparison between the front-side return search character data (145) and the candidate character data in the third comparing step (S22),
the front-side return search character generating step (S21) being further repeated by using the front-side return search character data (145) as new special-character-added search character data, and
when the candidate character data coinciding with the front-side return search character data is not present as a result of the comparison between the front-side return search character data (145) and the candidate character data (123) in the third comparing step (S22), the method further comprises
a front-side return character deleting step (S24) of deleting the front-side one character returned from the front-side return search character data (145) to generate the special-character-added search character data (146);
a rear-side return search character generating step (S25) of returning a rear-side one character of the front one and rear one characters adjacent to the special character most recently deleted in the special-character-added search character data (146) to generate rear-side return search character data (147); and
a fourth comparing step (S26) of comparing the rear-side return search character data (147) with the candidate character data (123),
wherein when the candidate character data (123) coinciding with the rear-side return search character data (147) is present as a result of a comparison between the rear-side return search character data (147) and the candidate character data in the fourth comparing step (S26),
the rear-side return search character generating step (S28) is further repeated by using the rear-side return search character data (147) as new special-character-added search character data,
when the candidate character data (123) coinciding with the rear-side return search character data (147) is not present as a result of the comparison between the rear-side return search character data and the candidate character data in the fourth comparing step (S26),
the candidate character string output step (S28) deletes the rear-side one character most recently returned from the rear-side return search character data (147) to extract a candidate character string (127) corresponding to the candidate character data (123).

4. The character string extraction method according to any one of claims 1 to 3, wherein the individual information is individual information held by a discarded household electrical appliance (40).

5. The character string extraction method according to claim 4, wherein the discarded household electrical appliance is a refrigerator.

6. A character string extraction device that extracts a pre-registered candidate character string (127) from image information obtained by reading individual information, the character string extraction device comprising:
a replacement information registering unit (80) for pre-registering replacement information (80A) to replace a specific character (120,121,122) with a designated character (126) with respect to character information (130) expected to be erroneously recognized;
a candidate character data registering unit (81) for pre-registering candidate character data (123) supposed when the designated character (126) is used with respect to the candidate character string (127);
an image information converting unit (82) for converting the read image information into character information (130);
a character information replacing unit (83) for replacing the specific character (120,121,122) with the designated character (126) when the character information (130) includes the specific character (120,121,122) and generating read character data (132) by using the converted character information;
a search character generating unit (84) for replacing a predetermined character of the read character data (132) with a special character, further replacing a continued special character group with one special character when the special characters are continued, and generating search character data (133) from the read character data (132), wherein the special character is defined as a wild card;
a first comparing unit (85) for comparing the search character data (133) with the candidate character data (123); and
a candidate character string output unit (86) for extracting a candidate character string (127) corresponding to the candidate character data (123) when the candidate character data (123) coinciding with the search character data (133) is present as a result of a comparison between the search character data (133) and the candidate character data (123) in the first comparing unit (85), wherein
when the candidate character data (123) coinciding with the search character data (133) is not present as a result of the comparison between the search character data (133) and the candidate character data (123) in the first comparing unit (85), the device further comprises
a special-character-added search character generating unit (87) for adding special characters to front and rear ends of the search character data (133) to generate special-character-added search character data (135) and further replacing a continued special character group with one special character when the special characters are continued, and
a second comparing unit (88) for comparing the special-character-added search character data (135) with the candidate character data (123),
wherein when the candidate character data (123) coinciding with the special-character-added search character data (135) is not present as a result of a comparison between the special-character-added search character data (135) and the candidate character data (123) in the second comparing unit (88),
each one of characters adjacent to the added special character before and behind the special character are deleted from the special-character-added search character data (135) to obtain new search character data (136) and the arithmetic operations from the special-character-added search character generating unit (87) and the second comparing unit (88) are repeated.

7. The character string extraction device according to claim 6, wherein, when the new search character data (139) includes less than two characters as a result of deleting the each one of characters adjacent to the added special character before and behind the special character from the special-character-added search character data (138), the second comparing unit causes searching to be impossible.

8. The character string extraction device according to claim 6 or 7, wherein
when the candidate character data (123) coinciding with the special-character-added search character data (141) is present as a result of the comparison between the special-character-added search character (141) data and the candidate character data (123) in the second comparing unit (88), the device further comprises
a front-side return search character generating unit (90) for returning a front-side one character of the front one and rear one characters adjacent to the special character most recently deleted in the special-character-added search character data (141) to generate front-side return search character data (145); and
a third comparing unit (91) for comparing the front-side return search character data with the candidate character data (123), wherein
when the candidate character data coinciding with the front-side return search character data is present as a result of a comparison between the front-side return search character data (145) and the candidate character data in the third comparing unit (91),
an arithmetic operation in the front-side return search character generating unit (90) being further repeated by using the front-side return search character data (145) as new special-character-added search character data, and
when the candidate character data (123) coinciding with the front-side return search character data is not present as a result of the comparison between the front-side return search character data (145) and the candidate character data (123) in the third comparing unit, the device further comprises
a front-side return character deleting unit (92) for deleting the front-side one character returned from the front-side return search character data (145) to generate the special-character-added search character data (146);
a rear-side return search character generating unit (93) for returning a rear-side one character of the front one and rear one characters adjacent to the special character most recently deleted in the special-character-added search character data (146) to generate rear-side return search character data (147); and
a fourth comparing unit (94) for comparing the rear-side return search character data with the candidate character data (123),
wherein when the candidate character data (123) coinciding with the rear-side return search character data (147) is present as a result of a comparison between the rear-side return search character data (147) and the candidate character data in the fourth comparing unit (94),
an arithmetic operation in the rear-side return search character generating unit (93) is further repeated by using the rear-side return search character data (147) as new special-character-added search character data,
when the candidate character data (123) coinciding with the rear-side return search character data (147) is not present as a result of the comparison between the rear-side return search character data and the candidate character data in the fourth comparing unit (94),
the candidate character string output unit (86) deletes the rear-side one character most recently returned from the rear-side return search character data (147) to extract a candidate character string (127) corresponding to the candidate character data (123).

9. The character string extraction device according to any one of claims 5 to 8, wherein the individual information is individual information held by a discarded household electrical appliance.

10. The character string extraction device according to claim 9, wherein the discarded household electrical appliance is a refrigerator (40).

## Patentansprüche

1. Zeichenkettenextraktionsverfahren, das eine vorregistrierte Kandidaten-Zeichenkette (127), die durch Lesen individueller Information aus Bildinformation bezogen ist, extrahiert, wobei das Zeichenkettenextraktionsverfahren Folgendes aufweist:
einen Schritt der Registrierung von Ersatzinformation zur Vorregistrierung von Ersatzinformation (80A) zum Ersetzen eines spezifischen Zeichens (120, 121, 122) mit einem bestimmten Zeichen (126), das in Bezug auf Zeicheninformation (130), erwartet wird, fälschlicherweise erkannt zu werden;
einen Schritt der Registrierung von Kandidaten-Zeichendaten zur Vorregistrierung von Kandidaten-Zeichendaten (123), die vermeintlich bei Anwenden des bestimmten Zeichens (126) in Bezug auf die Kandidaten-Zeichenkette (127) benutzt wird;
einen Schritt der Umwandlung von Bildinformation zur Umwandlung gelesener Bildinformation in Zeicheninformation (130);
einen Schritt des Ersetzens von Information (S2, S3) zum Ersetzen des spezifischen Zeichens (120, 121, 122) mit dem bestimmten Zeichen (126), wenn die Zeicheninformation (130) das spezifische Zeichen (120, 121, 122) enthält, und Erzeugen von Lesezeichendaten (132) durch Anwenden umgewandelter Zeicheninformation;
einen Schritt des Suchzeichenerzeugens (S4, S5) zum Ersetzen von im Voraus bestimmten Lesezeichendaten (132) durch ein Sonderzeichen, ferner Ersetzen einer fortgesetzten Sonderzeichengruppe mit einem Sonderzeichen, wenn die Sonderzeichen fortgesetzt werden, und Erzeugen von Suchzeichendaten (133) aus den Lesezeichendaten (132), wobei das Sonderzeichen als ein Platzhalter definiert ist;
einen ersten vergleichenden Schritt (S6) zum Vergleichen der Suchzeichendaten (133) mit den Kandidaten-Zeichendaten (123); und
einen Schritt (S7) der Ausgabe einer Kandidaten-Zeichenkette zum Extrahieren einer Kandidaten-Zeichenkette (127) entsprechend den Kandidaten-Zeichendaten (123), wenn die mit den Suchzeichendaten (133) zusammenfallenden Kandidaten-Zeichendaten (123) als ein Ergebnis eines Vergleichs der Suchzeichendaten (133) mit den Kandidaten-Zeichendaten (123) im ersten vergleichenden Schritt (S6) vorliegen, wobei
das Verfahren, wenn die mit den Suchzeichendaten (133) zusammenfallenden Kandidaten-Zeichendaten (123) nicht als ein Ergebnis eines Vergleichs der Suchzeichendaten (133) mit den Kandidaten-Zeichendaten (123) im ersten vergleichenden Schritt (S6) vorliegen, ferner Folgendes aufweist
einen Suchzeichen mit hinzugefügtem Sonderzeichen erzeugenden Schritt (S11) des Hinzufügens von Sonderzeichen an den vorderen und hinteren Enden der Suchzeichendaten (133) zum Erzeugen von Suchzeichendaten (135) mit hinzugefügtem Sonderzeichen und ferner Ersetzen einer fortgesetzten Sonderzeichengruppe mit einem Sonderzeichen, wenn die Sonderzeichen fortgesetzt werden, und
einen zweiten vergleichenden Schritt (S12) zum Vergleichen der Suchzeichendaten (135) mit hinzugefügtem Sonderzeichen mit den Kandidaten-Zeichendaten (123),
wobei, wenn die mit den Suchzeichendaten (135) mit hinzugefügtem Sonderzeichen zusammenfallenden Kandidaten-Zeichendaten (123) nicht als ein Ergebnis eines Vergleichs der Suchzeichendaten (135) mit hinzugefügtem Sonderzeichen mit den Kandidaten-Zeichendaten (123) im zweiten vergleichenden Schritt (S12) vorliegen, werden jedes der Zeichen neben dem hinzugefügten Sonderzeichen vor und hinter dem Sonderzeichen aus den Suchzeichendaten (135) mit hinzugefügtem Sonderzeichen gelöscht, damit neue Suchzeichendaten (136) erhalten werden, und der Schritt (S11) des Erzeugens der Suchzeichendaten mit hinzugefügtem Sonderzeichen und der zweite Schritt (S12) des Vergleichens werden wiederholt.

2. Zeichenkettenextraktionsverfahren nach Anspruch 1, ferner aufweisend einen Schritt (S16) der, wenn die neuen Suchzeichendaten (139), als ein Ergebnis des Löschens jedes der Zeichen neben dem hinzugefügten Sonderzeichen vor und hinter dem Sonderzeichen aus den Suchzeichendaten (138) mit hinzugefügtem Sonderzeichen, weniger als zwei Zeichen umfasst, bewirkt, dass das Suchen unmöglich wird.

3. Zeichenkettenextraktionsverfahren nach Anspruch 1 oder 2, wobei
wenn die mit den Suchzeichendaten (141) mit hinzugefügtem Sonderzeichen zusammenfallenden Kandidaten-Zeichendaten (123) als ein Ergebnis des Vergleichs der Suchzeichendaten (141) mit hinzugefügtem Sonderzeichen mit den Kandidaten-Zeichendaten (123) im zweiten Schritt (S12) des Vergleichens vorliegen, das Verfahren ferner Folgendes aufweist:
einen Schritt (S21) des Erzeugens eines Vorderseiten-Rückgabe-Suchzeichens zur Rückgabe eines vorderseitigen Zeichens der vorderen und hinteren einzelnen Zeichen neben dem zuletzt gelöschten in den Suchzeichendaten (141) mit hinzugefügtem Sonderzeichen, zum Erzeugen von Vorderseiten-Rückgabe-Suchzeichendaten (145); und
einen dritten vergleichenden Schritt (S22) zum Vergleichen der Vorderseiten-Rückgabe-Suchzeichendaten (145) mit den Kandidaten-Zeichendaten (123), wobei,
wenn die mit den Vorderseiten-Rückgabe-Suchzeichendaten zusammenfallenden Kandidaten-Zeichendaten als ein Ergebnis des Vergleichs der Vorderseiten-Rückgabe-Suchzeichendaten (145) mit den Kandidaten-Zeichendaten im dritten vergleichenden Schritt (S22),
wird der Schritt (S21) des Erzeugens eines Vorderseiten-Rückgabe-Suchzeichens durch Anwenden der Vorderseiten-Rückgabe-Suchzeichendaten (145) als neue Suchzeichendaten mit hinzugefügtem Sonderzeichen weiter wiederholt, und
wenn die mit den Vorderseiten-Rückgabe-Suchzeichendaten zusammenfallenden Kandidaten-Zeichendaten nicht als ein Ergebnis des Vergleichs der Vorderseiten-Rückgabe-Suchzeichendaten (145) mit den Kandidaten-Zeichendaten (123) im dritten vergleichenden Schritt (S22) vorliegen, weist das Verfahren ferner Folgendes auf:
einen Schritt (S24) des Löschens der Vorderseiten-Rückgabe-Suchzeichendaten zum Löschen des von den Vorderseiten-Rückgabe-Suchzeichendaten (145) zurückgegebenen einzelnen Vorderseiten-Zeichens zum Erzeugen der Suchzeichendaten (146) mit hinzugefügtem Sonderzeichen;
einen Schritt (S25) der Rückgabe eines einzelnen Rückseiten-Zeichens von den jeweiligen vorderen und hinteren Zeichen neben dem zuletzt gelöschten in den Suchzeichendaten (146) mit hinzugefügtem Sonderzeichen, zum Erzeugen von Rückseiten-Rückgabe-Suchzeichendaten (147); und
einen vierten vergleichenden Schritt (S26) zum Vergleichen der Rückseiten-Rückgabe-Suchzeichendaten (147) mit den Kandidaten-Zeichendaten (123),
wobei, wenn die mit den Rückseiten-Rückgabe-Suchzeichendaten (147) zusammenfallenden Kandidaten-Zeichendaten (123) nicht als ein Ergebnis des Vergleichs der Rückseiten-Rückgabe-Suchzeichendaten (147) mit den zusammenfallenden Kandidaten-Zeichendaten im vierten vergleichenden Schritt (S26) vorliegen,
wird der Schritt (S28) des Erzeugens des Rückseiten-Rückgabe-Suchzeichens durch Anwenden der Rückseiten-Rückgabe-Suchzeichendaten (147) als neue Suchzeichendaten mit hinzugefügtem Sonderzeichen weiter wiederholt,
wenn die mit den Rückseiten-Rückgabe-Suchzeichendaten (147) zusammenfallenden Kandidaten-Zeichendaten (123) nicht als ein Ergebnis des Vergleichs der Rückseiten-Rückgabe-Suchzeichendaten mit den Kandidaten-Zeichendaten im vierten vergleichenden Schritt (S26) vorliegen,
löscht der Schritt (S28) der Ausgabe der Kandidaten-Zeichenkette das zuletzt von den Rückseiten-Rückgabe-Suchzeichendaten (147) zurückgegebene Rückseiten-Zeichen zum Extrahieren einer Kandidaten-Zeichenkette (127) entsprechend den Kandidaten-Zeichendaten (123).

4. Zeichenkettenextraktionsverfahren nach einem der Ansprüche 1 bis 3, wobei die individuelle Information individuelle Information ist, die auf einem ausrangierten Elektro-Haushaltsgerät (40) vorhanden ist.

5. Zeichenkettenextraktionsverfahren nach Anspruch 4, wobei das ausrangierte Elektro-Haushaltsgerät ein Kühlschrank ist.

6. Zeichenkettenextraktionsvorrichtung, die eine vorregistrierte Kandidaten-Zeichenkette (127) aus Bildinformation, die durch Lesen individueller Information bezogen ist, wobei die Zeichenkettenextraktionsvorrichtung Folgendes aufweist:
eine Ersatzinformations-Registrierungseinheit (80) zur Vorregistrierung von Ersatzinformation (80A) zum Ersetzen eines spezifischen Zeichens (120, 121, 122) mit einem bestimmten Zeichen (126), das in Bezug auf Zeicheninformation (130), erwartet wird, fälschlicherweise erkannt zu werden;
eine Kandidaten-Zeichendaten-Registrierungseinheit (81) zur Vorregistrierung von Kandidaten-Zeichendaten (123), die vermeintlich bei Anwenden des bestimmten Zeichens (126) in Bezug auf die Kandidaten-Zeichenkette (127) benutzt wird;
eine Bildinformations-Umwandlungseinheit (82) zur Umwandlung gelesener Bildinformation in Zeicheninformation (130);
eine Zeicheninformations-Ersetzungseinheit (83) zum Ersetzen des spezifischen Zeichens (120, 121, 122) mit dem bestimmten Zeichen (126), wenn die Zeicheninformation (130) das spezifische Zeichen (120, 121, 122) enthält, und zum Erzeugen von Lesezeichendaten (132) durch Anwenden umgewandelter Zeicheninformation;
eine Suchzeichen-Erzeugungseinheit (84) zum Ersetzen der im Voraus bestimmten Lesezeichendaten (132) durch ein Sonderzeichen, ferner Ersetzen einer fortgesetzten Sonderzeichengruppe mit einem Sonderzeichen, wenn die Sonderzeichen fortgesetzt werden, und Erzeugen von Suchzeichendaten (133) aus den Lesezeichendaten (132), wobei das Sonderzeichen als ein Platzhalter definiert ist;
eine erste Vergleichseinheit (85) zum Vergleichen der Suchzeichendaten (133) mit den Kandidaten-Zeichendaten (123); und
eine Kandidaten-Zeichenkette-Ausgabeeinheit (86) zum Extrahieren einer Kandidaten-Zeichenkette (127) entsprechend den Kandidaten-Zeichendaten (123), wenn die mit den Suchzeichendaten (133) zusammenfallenden Kandidaten-Zeichendaten (123) als ein Ergebnis eines Vergleichs der Suchzeichendaten (133) mit den Kandidaten-Zeichendaten (123) in der ersten Vergleichseinheit (85) vorliegen, wobei
wenn die mit den Suchzeichendaten (133) zusammenfallenden Kandidaten-Zeichendaten (123) nicht als ein Ergebnis eines Vergleichs der Suchzeichendaten (133) mit den Kandidaten-Zeichendaten (123) in der ersten Vergleichseinheit (85) vorliegen, die Vorrichtung ferner Folgendes aufweist
eine Erzeugungseinheit (87) für Suchzeichen mit hinzugefügtem Sonderzeichen zum Hinzufügen von Sonderzeichen an den vorderen und hinteren Enden der Suchzeichendaten (133) zum Erzeugen von Suchzeichendaten (135) mit hinzugefügtem Sonderzeichen und ferner zum Ersetzen einer fortgesetzten Sonderzeichengruppe mit einem Sonderzeichen, wenn die Sonderzeichen fortgesetzt werden, und
eine zweite Vergleichseinheit (88) zum Vergleichen der Suchzeichendaten (135) mit hinzugefügtem Sonderzeichen mit den Kandidaten-Zeichendaten (123),
wobei, wenn die mit den Suchzeichendaten (135) mit hinzugefügtem Sonderzeichen zusammenfallenden Kandidaten-Zeichendaten (123) nicht als ein Ergebnis eines Vergleichs der Suchzeichendaten (135) mit hinzugefügtem Sonderzeichen mit den Kandidaten-Zeichendaten (123) in der zweiten Vergleichseinheit (88) vorliegen,
jedes der Zeichen neben dem hinzugefügten Sonderzeichen vor und hinter dem Sonderzeichen aus den Suchzeichendaten (135) mit hinzugefügtem Sonderzeichen gelöscht, damit neue Suchzeichendaten (136) erhalten werden, und die arithmetischen Vorgänge von der Erzeugungseinheit (87) für Suchzeichen mit hinzugefügtem Sonderzeichen und der zweiten Vergleichseinheit (88) wiederholt werden.

7. Zeichenkettenextraktionsvorrichtung nach Anspruch 6, wobei, wenn die neuen Suchzeichendaten (139) weniger als zwei Zeichen umfassen, als ein Ergebnis des Löschens jedes der Zeichen neben dem hinzugefügten Sonderzeichen vor und hinter dem Sonderzeichen aus den Suchzeichendaten (138) mit hinzugefügtem Sonderzeichen, die zweite Vergleichseinheit bewirkt, dass das Suchen unmöglich wird.

8. Zeichenkettenextraktionsvorrichtung nach Anspruch 6 oder 7, wobei,
wenn die mit den Suchzeichendaten (141) mit hinzugefügtem Sonderzeichen zusammenfallenden Kandidaten-Zeichendaten (123) als ein Ergebnis des Vergleichs der Suchzeichendaten (141) mit hinzugefügtem Sonderzeichen mit den Kandidaten-Zeichendaten (123) in der zweiten Vergleichseinheit (88) vorliegen, das Verfahren ferner Folgendes aufweist:
eine Vorderseiten-Rückgabe-Suchzeichen-Erzeugungseinheit (90) zur Rückgabe eines vorderseitigen Zeichens der vorderen und hinteren einzelnen Zeichen neben dem zuletzt gelöschten in den Suchzeichendaten (141) mit hinzugefügtem Sonderzeichen, zum Erzeugen von Vorderseiten-Rückgabe-Suchzeichendaten (145); und
eine dritte Vergleichseinheit (91) zum Vergleichen der Vorderseiten-Rückgabe-Suchzeichendaten mit den Kandidaten-Zeichendaten (123), wobei,
wenn die mit den Vorderseiten-Rückgabe-Suchzeichendaten zusammenfallenden Kandidaten-Zeichendaten als ein Ergebnis des Vergleichs der Vorderseiten-Rückgabe-Suchzeichendaten (145) mit den Kandidaten-Zeichendaten in der dritten Vergleichseinheit (91),
wird ein arithmetischer Vorgang in der Vorderseiten-Rückgabe-Suchzeichen-Erzeugungseinheit (90) durch Anwenden der Vorderseiten-Rückgabe-Suchzeichendaten (145) als neue Suchzeichendaten mit hinzugefügtem Sonderzeichen weiter wiederholt, und
wenn die mit den Vorderseiten-Rückgabe-Suchzeichendaten zusammenfallenden Kandidaten-Zeichendaten (123) nicht als ein Ergebnis des Vergleichs der Vorderseiten-Rückgabe-Suchzeichendaten (145) mit den Kandidaten-Zeichendaten (123) im dritten vergleichenden Schritt vorliegen, weist die Vorrichtung ferner Folgendes auf:
eine Vorderseiten-Rückgabe-Suchzeichen-Löscheinheit (92) zum Löschen des von den Vorderseiten-Rückgabe-Suchzeichendaten (145) zurückgegebenen einzelnen Vorderseiten-Zeichens zum Erzeugen der Suchzeichendaten (146) mit hinzugefügtem Sonderzeichen;
eine Rückseiten-Rückgabe-Suchzeichen-Erzeugungseinheit (93) zur Rückgabe eines einzelnen Rückseiten-Zeichens von den jeweiligen vorderen und hinteren Zeichen neben dem zuletzt gelöschten in den Suchzeichendaten (146) mit hinzugefügtem Sonderzeichen, zum Erzeugen von Rückseiten-Rückgabe-Suchzeichendaten (147); und
eine vierte Vergleichseinheit (94) zum Vergleichen der Rückseiten-Rückgabe-Suchzeichendaten mit den Kandidaten-Zeichendaten (123),
wobei, wenn die mit den Rückseiten-Rückgabe-Suchzeichendaten (147) zusammenfallenden Kandidaten-Zeichendaten (123) als ein Ergebnis des Vergleichs der Rückseiten-Rückgabe-Suchzeichendaten (147) mit den zusammenfallenden Kandidaten-Zeichendaten in der vierten Vergleichseinheit (94) vorliegen,
arithmetischer Vorgang in der Rückseiten-Rückgabe-Suchzeichen-Erzeugungseinheit (93) durch Anwenden der Rückseiten-Rückgabe-Suchzeichendaten (147) als neue Suchzeichendaten mit hinzugefügtem Sonderzeichen weiter wiederholt,
wenn die mit den Rückseiten-Rückgabe-Suchzeichendaten (147) zusammenfallenden Kandidaten-Zeichendaten (123) nicht als ein Ergebnis des Vergleichs der Rückseiten-Rückgabe-Suchzeichendaten mit den zusammenfallenden Kandidaten-Zeichendaten in der vierten Vergleichseinheit (94) vorliegen,
löscht die Kandidaten-Zeichenketten-Ausgabeeinheit (86) das zuletzt von den Rückseiten-Rückgabe-Suchzeichendaten (147) zurückgegebene Rückseiten-Zeichen, um eine Kandidaten-Zeichenkette (127) entsprechend den Kandidaten-Zeichendaten (123) zu extrahieren.

9. Zeichenkettenextraktionsvorrichtung nach einem der Ansprüche 5 bis 8, wobei, wobei die individuelle Information individuelle Information ist, die auf einem ausrangierten Elektro-Haushaltsgerät vorhanden ist.

10. Zeichenkettenextraktionsverfahren nach Anspruch 9, wobei das ausrangierte Elektro-Haushaltsgerät ein Kühlschrank (40) ist.

## Revendications

1. Procédé d'extraction de chaîne de caractères qui extrait une chaîne de caractères candidate préenregistrée (127) à partir d'informations d'image obtenues par la lecture d'informations individuelles, le procédé d'extraction de chaîne de caractères comprenant :
une étape d'enregistrement d'informations de remplacement qui consiste à préenregistrer des informations de remplacement (80A) pour remplacer un caractère spécifique (120, 121, 122) par un caractère désigné (126) par rapport à des informations de caractère (130) qui devraient être reconnues de façon erronée ;
une étape d'enregistrement de données de caractère candidates qui consiste à préenregistrer des données de caractère candidates (123) prétendues lorsque le caractère désigné (126) est utilisé par rapport à la chaîne de caractères candidate (127) ;
une étape de conversion d'informations d'image qui consiste à convertir des informations d'image lues en informations de caractère (130) ;
une étape de remplacement d'informations de caractère (S2, S3) qui consiste à remplacer le caractère spécifique (120, 121, 122) par le caractère désigné (126) lorsque les informations de caractère (130) comportent le caractère spécifique (120, 121, 122) et à générer les données de caractère lues (132) en utilisant les informations de caractère converties ;
une étape de génération de caractère de recherche (S4,S5) qui consiste à remplacer un caractère prédéterminé des données de caractères lues (132) par un caractère spécial, à remplacer en outre un groupe de caractères spéciaux continus par un caractère spécial lorsque les caractères spéciaux sont continus, et à générer des données de caractère de recherche (133) à partir des données de caractère lues (132), où le caractère spécial est défini en tant que métacaractère,
une première étape de comparaison (S6) qui consiste à comparer les données de caractère de recherche (133) aux données de caractère candidates (123) ; et
une étape de sortie de chaîne de caractères candidate (S7) qui consiste à extraire une chaîne de caractères candidate (127) correspondant aux données de caractère candidates (123) lorsque les données de caractère candidates (123) coïncidant avec les données de caractère de recherche (133) sont présentes suite à une comparaison entre les données de caractère de recherche (133) et les données de caractère candidates (123) dans la première étape de comparaison (S7), où
lorsque les données de caractère candidates (123) coïncidant avec les données de caractères de recherche (133) ne sont pas présentes suite à la comparaison entre les données de caractère de recherche (133) et les données de caractère candidates (123) dans la première étape de comparaison (S6), le procédé comprend en outre
une étape de génération de caractère de recherche additionné d'un caractère spécial (S11) qui consiste à ajouter des caractères spéciaux aux extrémités avant et arrière des données de caractère de recherche (133) pour générer des données de caractère de recherche additionné d'un caractère spécial (135), et à remplacer en outre un groupe de caractères spéciaux continus par un caractère spécial lorsque les caractères spéciaux sont continus, et
une deuxième étape de comparaison (S12) qui consiste à comparer les données de caractère de recherche additionné d'un caractère spécial (135) aux données de caractère candidates (123),
où lorsque les données de caractère candidates (123) coïncidant avec les données de caractère de recherche additionné d'un caractère spécial (135) ne sont pas présentes suite à une comparaison entre les données de caractère de recherche additionné d'un caractère spécial (135) et les données de caractère candidates (123) dans la deuxième étape de comparaison (S12), chacun des caractères adjacents au caractère spécial ajouté devant et derrière le caractère spécial est supprimé des données de caractère de recherche additionné d'un caractère spécial (135) pour obtenir de nouvelles données de caractère de recherche (136) et l'étape de génération de caractère de recherche additionné d'un caractère spécial (S11) et la deuxième étape de comparaison (S12) sont répétées.

2. Procédé d'extraction de chaîne de caractères selon la revendication 1, comprenant en outre une étape (S16) qui consiste à provoquer, lorsque les nouvelles données de caractère de recherche (139) comportent moins de deux caractères suite à la suppression de chacun des caractères adjacents au caractère spécial ajouté devant et derrière le caractère spécial des données de caractère de recherche additionné d'un caractère spécial (138), l'impossibilité de la recherche.

3. Procédé d'extraction de chaîne de caractères selon la revendication 1 ou 2, dans lequel
lorsque les données de caractère candidates (123) coïncidant avec les données de caractère de recherche additionné d'un caractère spécial (141) sont présentes suite à la comparaison entre les données de caractère de recherche additionné d'un caractère spécial (141) et les données de caractère candidates (123) dans la deuxième étape de comparaison (S12), le procédé comprend en outre
une étape de génération de caractère de recherche de retour du côté avant (S21) qui consiste à retourner un caractère du côté avant des caractères avant et arrière adjacents au caractère spécial le plus récemment supprimé dans les données de caractère de recherche additionné d'un caractère spécial (141) pour générer des données de caractère de recherche de retour du côté avant (145) ; et
une troisième étape de comparaison (S22) qui consiste à comparer les données de caractère de recherche de retour du côté avant (145) aux données de caractère candidates (123), où
lorsque les données de caractère candidates coïncidant avec les données de caractère de recherche de retour du côté avant sont présentes suite à une comparaison entre les données de caractère de recherche de retour du côté avant (145) et les données de caractère candidates dans la troisième étape de comparaison (S22),
l'étape de génération de caractère de recherche de retour du côté avant (S2L) étant en outre répétée en utilisant les données de caractère de recherche de retour du côté avant (145) en tant que nouvelles données de caractère de recherche additionné d'un caractère spécial, et
lorsque les données de caractère candidates coïncidant avec les données de caractère de recherche de retour du côté avant ne sont pas présentes suite à la comparaison entre les données de caractère de recherche de retour du côté avant (145) et les données de caractère candidates (123) dans la troisième étape de comparaison (S22), le procédé comprend en outre
une étape de suppression de caractère de retour du côté avant (S24) qui consiste à supprimer le caractère du côté avant retourné des données de caractère de recherche de retour du côté avant (145) pour générer les données de caractère de recherche additionné d'un caractère spécial (146) ;
une étape de génération de caractère de recherche de retour du côté arrière (S25) qui consiste à retourner un caractère du côté arrière des caractères avant et arrière adjacents au caractère spécial le plus récemment supprimé dans les données de caractère de recherche additionné d'un caractère spécial (146) pour générer des données de caractère de recherche de retour du côté arrière (147) ; et
une quatrième étape de comparaison (S26) qui consiste à comparer les données de caractère de recherche de retour du côté arrière (147) aux données de caractère candidates (123),
où, lorsque les données de caractère candidates (123) coïncidant avec les données de caractère de recherche de retour du côté arrière (147) sont présentes suite à une comparaison entre les données de caractère de recherche de retour du côté arrière (147) et les données de caractère candidates dans la quatrième étape de comparaison (S26),
l'étape de génération de caractère de recherche de retour du côté arrière (S28) est en outre répétée en utilisant les données de caractère de recherche de retour du côté arrière (147) en tant que nouvelles données de caractère de recherche additionné d'un caractère spécial,
lorsque les données de caractère candidates (123) coïncidant avec les données de caractère de recherche de retour du côté arrière (147) ne sont pas présentes suite à la comparaison entre les données de caractère de recherche de retour du côté arrière et les données de caractère candidates dans la quatrième étape de comparaison (S26),
l'étape de sortie de chaîne de caractères candidate (S28) supprime le caractère du côté arrière le plus récemment retourné des données de caractère de recherche de retour du côté arrière (147) pour extraire une chaîne de caractères candidate (127) correspondant aux données de caractère candidates (123).

4. Procédé d'extraction de chaîne de caractères selon l'une quelconque des revendications 1 à 3, dans lequel les informations individuelles sont des informations individuelles détenues par un appareil électroménager mis au rebut (40).

5. Procédé d'extraction de chaîne de caractères selon la revendication 4, dans lequel l'appareil électroménager mis au rebut est un réfrigérateur.

6. Dispositif d'extraction de chaîne de caractères qui extrait une chaîne de caractères candidate préenregistrée (127) à partir d'informations d'image obtenues par la lecture d'informations individuelles, le dispositif d'extraction de chaîne de caractères comprenant :
une unité d'enregistrement d'informations de remplacement (80) pour préenregistrer les informations de remplacement (80A) afin de remplacer un caractère spécifique (120, 121, 122) par un caractère désigné (126) par rapport à des informations de caractère (130) qui devraient être reconnues de façon erronée ;
une unité d'enregistrement de données de caractère candidates (81) pour préenregistrer des données de caractère candidates (123) prétendues lorsque le caractère désigné (126) est utilisé par rapport à la chaîne de caractères candidate (127) ;
une unité de conversion d'informations d'image (82) pour convertir les informations d'image lues en informations de caractère (130) ;
une unité de remplacement d'informations de caractère (83) pour remplacer le caractère spécifique (120, 121, 122) par le caractère désigné (126) lorsque les informations de caractère (130) comportent le caractère spécifique (120, 121, 122) et pour générer des données de caractère lues (132) en utilisant les informations de caractère converties ;
une unité de génération de caractère de recherche (84) pour remplacer un caractère prédéterminé des données de caractère lues (132) par un caractère spécial, pour remplacer en outre un groupe de caractères spéciaux continus par un caractère spécial lorsque les caractères spéciaux sont continus, et pour générer des données de caractère de recherche (133) à partir des données de caractère lues (132), où le caractère spécial est défini en tant que métacaractère ;
une première unité de comparaison (85) pour comparer les données de caractère de recherche (133) aux données de caractère candidates (123) ; et
une unité de sortie de chaîne de caractères candidate (86) pour extraire une chaîne de caractères candidate (127) correspondant aux données de caractère candidates (123) lorsque les données de caractère candidates (123) coïncidant avec les données de caractère de recherche (133) sont présentes suite à une comparaison entre les données de caractère de recherche (133) et les données de caractère candidates (123) dans la première unité de comparaison (85), où
lorsque les données de caractère candidates (123) coïncidant avec les données de caractère de recherche (133) ne sont pas présentes suite à la comparaison entre les données de caractère de recherche (133) et les données de caractère candidates (123) dans la première unité de comparaison (85), le dispositif comprend en outre
une unité de génération de caractère de recherche additionné d'un caractère spécial (87) pour ajouter des caractères spéciaux aux extrémités avant et arrière des données de caractère de recherche (133) afin de générer des données de caractère de recherche additionné d'un caractère spécial (135) et pour remplacer en outre un groupe de caractères spéciaux continus par un caractère spécial lorsque les caractères spéciaux sont continus, et
une deuxième unité de comparaison (88) pour comparer les données de caractère de recherche additionné d'un caractère spécial (135) aux données de caractère candidates (123),
où, lorsque les données de caractère candidates (123) coïncidant avec les données de caractère de recherche additionné d'un caractère spécial (135) ne sont pas présentes suite à une comparaison entre les données de caractère de recherche additionné d'un caractère spécial (135) et les données de caractère candidates (123) dans la deuxième unité de comparaison (88),
chacun des caractères adjacents au caractère spécial ajouté devant et derrière le caractère spécial est supprimé des données de caractère de recherche additionné d'un caractère spécial (135) pour obtenir des nouvelles données de caractère de recherche (136) et les opérations arithmétiques provenant de l'unité de génération de caractère de recherche additionné d'un caractère spécial (87) et de la deuxième unité de comparaison (88) sont répétées.

7. Dispositif d'extraction de chaîne de caractères selon la revendication 6, dans lequel, lorsque les nouvelles données de caractère de recherche (139) comportent moins de deux caractères suite à la suppression de chacun des caractères adjacents au caractère spécial ajouté devant et derrière le caractère spécial des données de caractère de recherche additionné d'un caractère spécial (138), la deuxième unité de comparaison provoque l'impossibilité de recherche.

8. Dispositif d'extraction de chaîne de caractères selon la revendication 6 ou 7, dans lequel
lorsque les données de caractère candidates (123) coïncidant avec les données de caractère de recherche additionné d'un caractère spécial (141) sont présentes suite à la comparaison entre les données de caractère de recherche additionné d'un caractère spécial (141) et les données de caractère candidates (123) dans la deuxième unité de comparaison (88), le dispositif comprend en outre
une unité de génération de caractère de recherche de retour du côté avant (90) pour retourner un caractère du côté avant des caractères avant et arrière adjacents au caractère spécial le plus récemment supprimé dans les données de caractère de recherche additionné d'un caractère spécial (141) afin de générer des données de caractère de recherche de retour du côté avant (145) ; et
une troisième unité de comparaison (91) pour comparer les données de caractère de recherche de retour du côté avant aux données de caractère candidates (123), où
lorsque les données de caractère candidates coïncidant avec les données de caractère de recherche de retour du côté avant sont présentes suite à une comparaison entre les données de caractère de recherche de retour du côté avant (145) et les données de caractère candidates dans la troisième unité de comparaison (91),
une opération arithmétique dans l'unité de génération de caractères de recherche de retour du côté avant (90) étant en outre répétée en utilisant les données de caractère de recherche de retour du côté avant (145) en tant que nouvelles données de caractère de recherche additionné d'un caractère spécial, et
lorsque les données de caractère candidates (123) coïncidant avec les données de caractère de recherche de retour du côté avant ne sont pas présentes suite à la comparaison entre les données de caractère de recherche de retour du côté avant (145) et les données de caractère candidates (123) dans la troisième unité de comparaison, le dispositif comprend en outre
une unité de suppression de caractère de retour du côté avant (92) pour supprimer le caractère du côté avant retourné des données de caractère de recherche de retour du côté avant (145) afin de générer les données de caractère de recherche additionné d'un caractère spécial (146) ;
une unité de génération de caractère de recherche de retour du côté arrière (93) pour retourner un caractère du côté arrière des caractères avant et arrière adjacents au caractère spécial le plus récemment supprimé dans les données de caractère de recherche additionné d'un caractère spécial (146) afin de générer des données de caractère de recherche de retour du côté arrière (147) ; et
une quatrième unité de comparaison (94) pour comparer les données de caractère de recherche de retour du côté arrière aux données de caractère candidates (123),
où lorsque les données de caractère candidates (123) coïncidant avec les données de caractère de recherche de retour du côté arrière (147) sont présentes suite à une comparaison entre les données de caractère de recherche de retour du côté arrière (147) et les données de caractère candidates dans la quatrième unité de comparaison (94),
une opération arithmétique dans l'unité de génération de caractère de recherche de retour du côté arrière (93) est en outre répétée en utilisant les données de caractère de recherche de retour du côté arrière (147) en tant que nouvelles données de caractère de recherche additionné d'un caractère spécial,
lorsque les données de caractère candidates (123) coïncidant avec les données de caractère de recherche de retour du côté arrière (147) ne sont pas présentes suite à la comparaison entre les données de caractère de recherche de retour du côté arrière et les données de caractère candidates dans la quatrième unité de comparaison (94),
l'unité de sortie de chaîne de caractères candidate (86) supprime le caractère du côté arrière le plus récemment retourné des données de caractère de recherche de retour du côté arrière (147) pour extraire une chaîne de caractères candidate (127) correspondant aux données de caractère candidates (123).

9. Dispositif d'extraction de chaîne de caractères selon l'une quelconque des revendications 5 à 8, dans lequel les informations individuelles sont des informations individuelles détenues par un appareil électroménager mis au rebut.

10. Dispositif d'extraction de chaîne de caractères selon la revendication 9,
dans lequel l'appareil électroménager mis au rebut est un réfrigérateur (40).
